# EUROPEAN PATENT APPLICATION

(11) **EP 1 927 983 A2**
(43) Date of publication of application: **04.06.2008**
(21) Application number: 07254552.8
(22) Date of filing: 22.11.2007
(51) Int. Cl.: G11B 7/125

(54) **Optical head, optical disc apparatus including the optical head, and information processing apparatus including the optical disk apparatus**

(30) Priority: 29.11.2006 JP 2006321198
(71) Applicant: Ricoh Company, Ltd, Ohta-ku Tokyo 143-8555 (JP)
(72) Inventor: Kitabayashi, Junichi, Kawasaki-shi, Kanagawa (JP)
(74) Representative: White, Duncan Rohan

(57) **Abstract**

An optical head is used to irradiate a beam onto an optical recording medium having multiple recording positions in the thickness direction, and to receive a reflection beam reflected from the recording medium (15). The optical head has a light source (111), an optical system, and a detector (170). The optical system transmits the irradiation beam from the light source (111) to the recording positions of the medium (15), separates optical components based on wavelength, and transmits the components to respective detection positions, where the components are individually detected.

## Description

### BACKGROUND OF THE INVENTION

### FIELD OF THE INVENTION

The present invention relates to an optical head, an optical disc apparatus including the optical head, and an information processing apparatus including the optical disc apparatus.

### DISCUSSION OF THE BACKGROUND

Recently, optical discs such as CD or DVD have attracted attention as information media for recording information such as music, movie, picture, computer software, etc., with development in digital technology and data compression technology, and optical disc devices have become more common as their price has gone down. The amount of content information tends to increase every year, and further increases in storage capacity of optical discs is expected.

Moreover, a hologram system has attracted attention in recent years as a means by which the storage capacity of optical discs can be increased.

However, the reproducibility of the optical system and the reliability of record material are still not adequate, and there is an opinion, which is doubtful of utilization from a theoretic viewpoint. On the other hand, a three-dimensional system which has ten or more recording layers is considered promising. In the three-dimensional multilayer system, improved transmissivity and reduced cross talk between layers can be achieved by using fluorescence material and two photon absorbent material as a record material. As compared with the hologram system, the greatest fault with the three-dimensional multi-layer system is that the record speed and reproduction (reading) speed are slow.

Japanese Laid-Open Patent Application No. S63-113947 discloses a multiple wavelength writing type optical element, which includes a material having a wavelength dispersion, receives light having multiple wavelengths and irradiated from a multiple wavelength light source simultaneously or discretely, and focuses the light on optical recording layers of a recording medium corresponding to each wavelength. The optical element focuses a beam irradiated from a multiple wavelength light source on multiple optical recording layers of an optical recording disc.

Japanese Patent No. 2988732 discloses an information recording and reproducing device, which includes multiple light sources allocated on the same plane and irradiating beams, whose wavelengths are the same, an objective lens for focusing the beams, and light path length modulation means for modulating a light path length so that the beams converge at each recording layer corresponding to each beam.

"Volume holographic device for the spherical aberration correction and the parallel data access in three-dimensional memory" discloses a device that focuses beams irradiated from multiple light sources on different recording layers of a recording medium, using an objective lens and a multiply-exposed volume hologram.

Japanese Laid-Open Patent Application No. 2002-539494 discloses a multi-layered confocal interference microscope using a wave number domain reflectance meter. The confocal interference microscope generates a probe beam and a reference beam from a broad spectrum point light source, adds an anti-symmetric feature to the reference beam, converts the probe beam into a beam focused on a line in an area, and adds an anti-symmetric feature to the probe beam. Therefore, the confocal interference microscope identifies a focusing image from an extra-focal image so that an error on a subjective information area is reduced.

Japanese Laid-Open Patent Application No. 2005-211909 discloses a laser equipment equipping a laser by irradiating a laser to equipping material. The laser equipment includes a wavelength distribution selecting means and an irradiation point adjusting means as a device using a multiple wavelength light source. The wavelength distribution selecting means selects a wavelength for irradiating to the material from beams irradiated from a light source, and irradiates the selected beam to the irradiation point, and adjusting means focuses the irradiated beams on different focal positions with respect to wavelength.

Japanese Patent No. 2759635 discloses a non-diffracted beam generation device, which includes an optical system emitting a spherical wave having a hollow-ground light wave plane from an aperture plane, and a correction optical system deforming the light wave plane so that curvature of the spherical wave gets smaller toward a fringe of the wave plane as a device leveraging a spherical aberration.

Japanese Laid-Open Patent Application No. H11-45456 discloses an optical head, which collimates a laser beam irradiated from a semiconductor laser diode by a collimation lens, changes a direction of the laser beam by a beam splitter, and irradiates the beam, whose depth of focus is deeper than a range of fluctuation of a recording medium such as an optical disc at a timing of recording, reproducing or erasing. The device uses an axicon lens. Therefore, the optical head omits a special mechanism for focusing.

Japanese Laid-Open Patent Application No. 2002-304760 discloses a multiple light optical head which uses a photonic crystal. The head records (or reproduces) information to (or from) an optical recording medium using multiple wavelengths. The multiple light optical head includes a photonic crystal as a branching element.

### SUMMARY OF INVENTION

The multiple wavelength writing type optical element disclosed in Japanese Laid-Open Patent Application No. S63-113947 needs to use a wavelength-appropriate recording material for each optical recording layer. The optical element records information to and reproduces information from each recording layer using multiple optical spots, whose wavelengths are widely different. However, the wavelength range of the fluorescence material and a two photon absorbent material is narrow. Therefore, the optical element cannot be used with optical recording layers that are stacked more than ten layers thick. And in the case that the material is changed, the manufacturing cost of an optical disc increases. Therefore it is impractical. And the multiple wavelength writing type optical element has a fault of making the device too big and its use of light is inefficient because it has multiple light sources, a dichroic mirror or a half mirror combining beams irradiated from each light source.

The information recording and reproducing device disclosed in Japanese Patent No. 2988732 generates a wave aberration of a beam irradiated from a light source, which is not allocated in a light axis, at a lens system. Therefore, it is very difficult to obtain a diffraction-limited optical spot at a recording layer. And the amounts of light passing through the objective lens are different with respect to each light source because the collimation lens irradiates the beam having an angle. Therefore, the light use efficiency is reduced. And the information recording and reproducing device becomes too big because the information recording and reproducing device has multiple light sources.

The device disclosed in "Volume holographic device for the spherical aberration correction and the parallel data access in three-dimensional memory" has a fault that the obtained board face power comes down when the spot number increases, because the diffraction efficiency comes down corresponding to the number of multi-exposure in volume hologram. In addition, the amounts of light passing through the objective lens and the distribution of the amounts of light are different with respect to each light source. This is because the collimation lens irradiates the beam having an angle in the case that multiple light sources are allocated on a plane that is perpendicular to a light axis. Therefore, light use efficiency comes down and asymmetric diversity of a spot shape occurs. Also, the device becomes too big because it has multiple light sources.

The multi-layered confocal interference microscope disclosed in Japanese Laid-Open Patent Application No. 2002-539494 has a fault that record density of a plane area and reproduction resolution are low because a spot diameter exists in an area other than a focal point.

The invention is made in light of the above-mentioned problems. First, the present invention may provide an optical head irradiating beams to multiple recording positions in the thickness direction of an optical disc simultaneously and detecting reflected beams reflected from multiple recording positions individually without increasing cost and without increasing the size of the optical head.

Second, the present invention may provide an optical disc apparatus accessing multiple recording positions in the thickness direction of an optical disc simultaneously without increasing cost and without increasing the size of the optical disc apparatus.

Third, the present invention may provide an information processing apparatus advancing an access speed for accessing an optical disc having multiple recording positions in the thickness direction without increasing cost and without increasing the size of the information processing apparatus.

The present invention relates to a device, apparatus or system for irradiating an irradiation beam onto an optical recording medium having multiple recording positions in the thickness direction, and for receiving a reflection beam reflected from the recording medium. According to one aspect of the invention, an optical head includes a light source, an optical system, and a detector. The optical system transmits the irradiation beam from the light source to the recording positions of the optical recording medium, and separates optical components of the reflection beam, and transmits the optical components to respective detection positions. The detector may be provided with multiple detecting areas for detecting the optical components individually.

### BRIEF DESCRIPTION OF THE DRAWINGS

A more complete appreciation of the present invention, and many of the attendant advantages thereof, will be more readily obtained as the same becomes better understood by reference to the following figures in which:
FIG. 1 is a block diagram showing a configuration of an optical disc apparatus according to a first embodiment of the present invention;
FIG. 2 shows an optical pickup apparatus of FIG. 1A;
FIG. 3 shows a wavelength spectrum of a beam irradiated from a light source;
FIG. 4 shows a spatial modulation element;
FIG. 5A shows a function of a chromatic aberration lens against a beam, whose wavelength is λ1;
FIG. 5B shows a function of a chromatic aberration lens against a beam, whose wavelength is λ2;
FIG. 5C shows a function of a chromatic aberration lens against a beam, whose wavelength is λ3;
FIG. 6 is a schematic view showing the locations of multiple focus points within an optical disc;
FIG. 7 is a schematic view of the linear spot of FIG. 6;
FIG. 8 shows a detector;
FIG. 9 is a flowchart showing processes in a case where the optical disc apparatus shown in FIG. 1 receives a recording request from an upper apparatus;
FIG. 10 is a flowchart showing processes in a case where the optical disc apparatus shown in FIG. 1 receives a reproducing request from an upper apparatus;
FIG. 11 shows the other wavelength spectrum of a beam irradiated from a light source;
FIG. 12 shows a spatial modulation element corresponding to the light source shown in FIG. 11;
FIG. 13 shows a detector corresponding to the light source shown in FIG. 11;
FIG. 14 shows a modified example 1 of the optical pickup apparatus shown in FIG. 2;
FIG. 15 shows a modified example 2 of the optical pickup apparatus shown in FIG. 2;
FIG. 16 shows a modified example 3 of the optical pickup apparatus shown in FIG. 2;
FIG. 17 shows a modified example 4 of the optical pickup apparatus shown in FIG. 2;
FIGs. 18A and 18B show a wavelength filter shown in FIG. 17;
FIG. 19 shows a modified example 5 of the optical pickup apparatus shown in FIG. 2;
FIG. 20 shows an optical disc including a servo layer;
FIG. 21 shows an optical pickup apparatus according to a second embodiment of the present invention;
FIG. 22 shows a spatial modulation element shown in FIG. 21;
FIGs. 23A, 23B, and 23C show a function of a spatial modulation element shown in FIG. 21;
FIGs. 24A and 24B show the other function of the spatial modulation element shown in FIG. 21;
FIG. 25 shows an orbicular zone element shown in FIG. 21.
FIGs. 26A and 26B show a function of the orbicular zone element shown in FIG. 21;
FIGs. 27A, 27B and 27C show an alternative orbicular zone element for the apparatus shown in FIG. 21;
FIGs. 28A, 28B and 28C show another alternative orbicular zone element for the apparatus shown in FIG. 21;
FIG. 29 shows a modified example of the optical pickup apparatus shown in FIG. 21;
FIGs. 30A and 30B show a divided mirror element shown in FIG. 29;
FIG. 31 shows a modified example of the optical pickup apparatus shown in FIG. 29;
FIG. 32 shows an optical pickup apparatus according to a third embodiment of the present invention;
FIG. 33 is a block diagram showing a configuration of an optical disc apparatus including the optical pickup apparatus shown in FIG. 32;

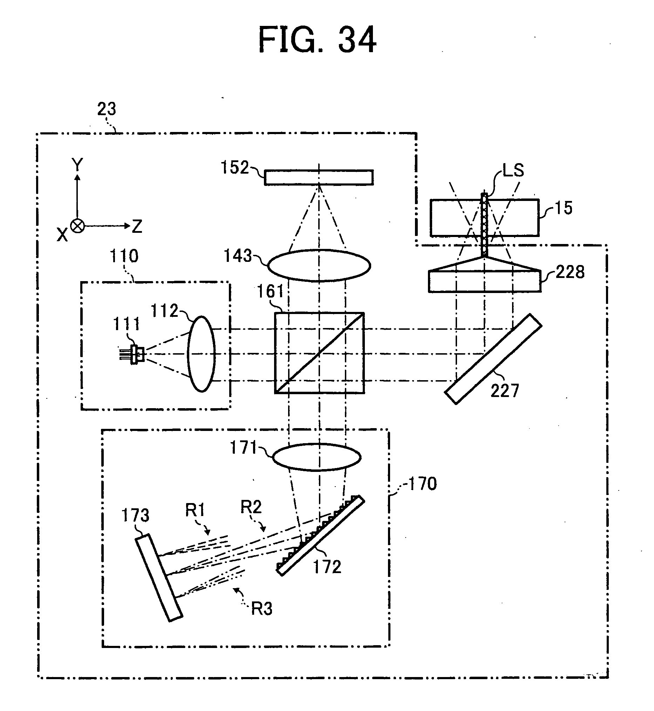

FIG. 34 shows a modified example 1 of the optical pickup apparatus shown in FIG. 32;
FIG. 35 shows a modified example 2 of the optical pickup apparatus shown in FIG. 32;
FIGs. 36A, 36B, and 36C show a modified example 3 of the optical pickup apparatus shown in FIG. 32;
FIG. 37 shows a modified example 4 of the optical pickup apparatus shown in FIG. 32;
FIG. 38 is a block diagram showing a configuration of an information processing apparatus according to the present invention;

### DETAILED DESCRIPTION OF PREFERRED EMBODIMENTS

### -Optical disc apparatus-

### -First embodiment -

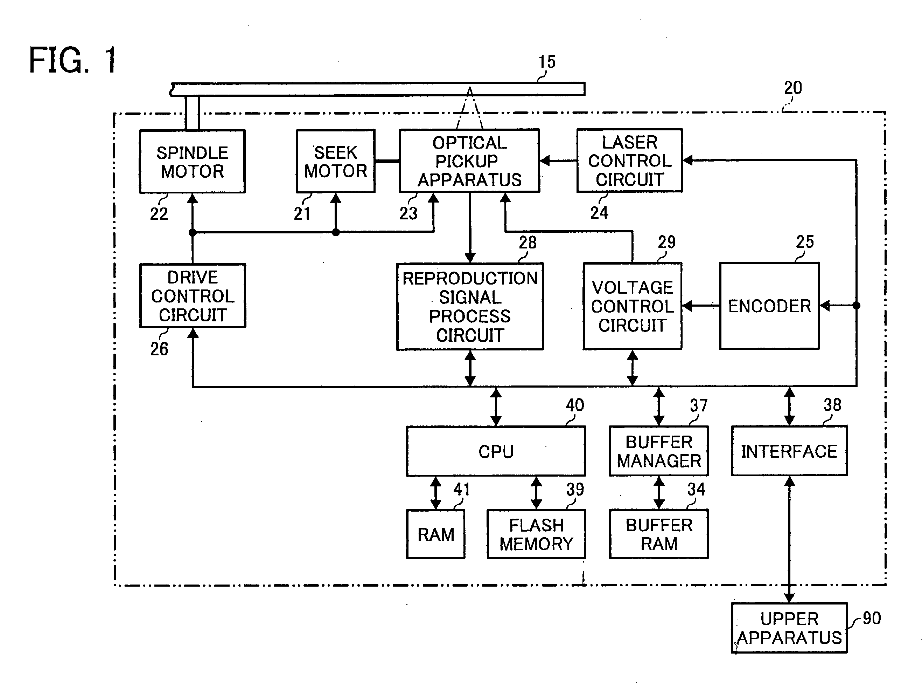

A first embodiment of the present invention is described below with reference to FIGs. 1 through 10. FIG. 1 schematically shows a configuration of an optical disc apparatus 20 according to a first embodiment of the present invention.

The optical disc apparatus 20 includes a spindle motor 22 driving an optical disc 15, an optical pickup apparatus 23, a seek motor 21 driving the optical pickup apparatus 23 along a seek direction, a laser control circuit 24, an encoder 25, a drive control circuit 26, a reproduction signal process circuit 28, a voltage control circuit 29, a buffer RAM 34, a buffer manager 37, an interface 38, a flash memory 39, a CPU 40, and RAM 41. Arrows in FIG. 1 indicate flows of typical signals and information but do not indicate all of the relationships and connections.

Here, the optical disc 15 is, for example, a disc having three recording layers, a first recording layer (hereinafter L1), a second recording layer (hereinafter L2), and a third recording layer (hereinafter L3) in the order from a side that a beam irradiates.

The optical pickup apparatus 23 irradiates the beam onto the optical disc and detects the beam that is reflected by each of the recording layers of the optical disc 15.

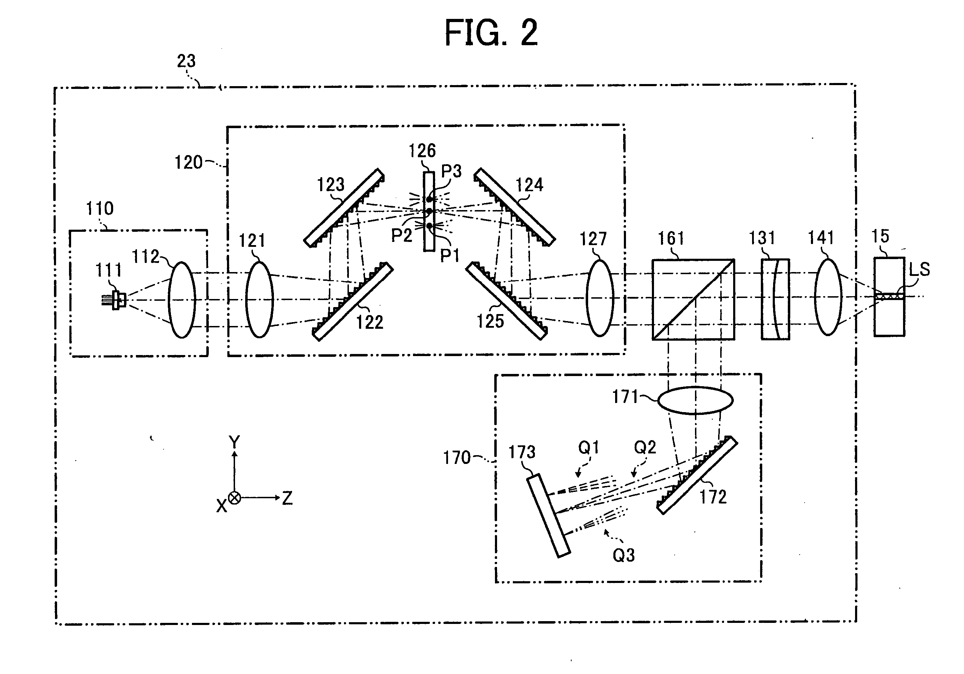

The pickup apparatus 23 includes, for example as shown in FIG. 2, an optical output device 110, a modulation optical system 120, a beam splitter 161, a chromatic aberration lens 131, an objective lens 141, a detecting system 170, and a driving system, not shown in FIG. 2, driving the objective lens 141.

The optical output device 110 includes a light source 111 and a collimation lens 112.

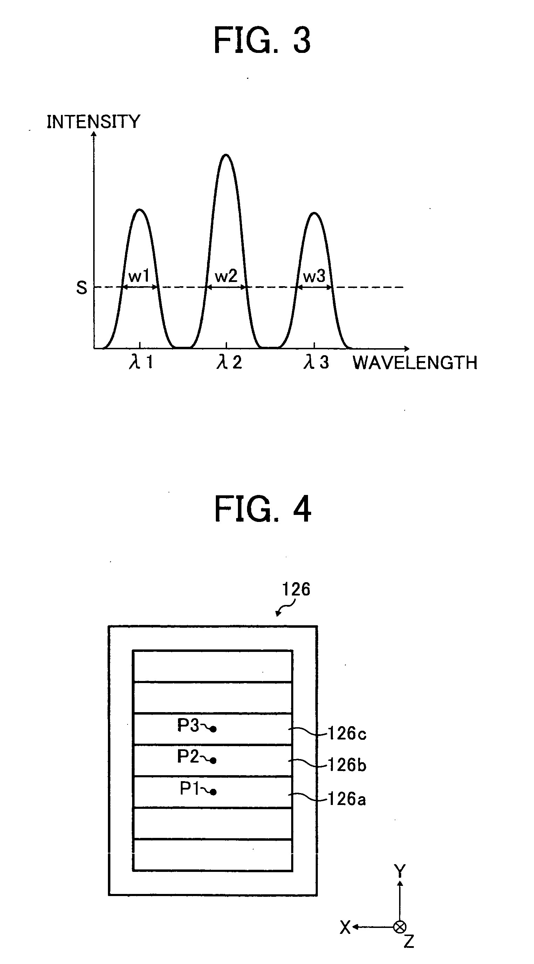

The light source 111 is a multiple wavelength source having multiple wavelengths, which are from a few nm to 20 nm. Here, the light source 111 is, for example as shown in FIG. 3, a multiple wavelength source having three wavelength peaks, whose spectrum are wavelength λ1, wavelength λ2, and wavelength λ3. Hereinafter, for convenience, it is assumed that a peak including wavelength λ1 is a peak 1, a peak including wavelength λ2 is a peak 2, and a peak including wavelength λ3 is a peak 3. And, for convenience, it is assumed that w1 is a peak range of the peak 1, w2 is a peak range of the peak 2, and w3 is a peak range of the peak 3 in the case that a light intensity is a predetermined value (S in FIG. 3). In addition, it is assumed that + direction of Z axis is a direction in which maximum beam intensity irradiates, X axis direction and Y axis direction are two directions, which are at right angles to each other in a plane perpendicular to the 7 axis. And it is assumed that an optical component of the wavelength λ1 corresponds to the first recording layer L1, an optical component of the wavelength λ2 corresponds to the second recording layer L2, and an optical component of the wavelength λ3 corresponds to the third recording layer L3. Moreover, FIG. 2 indicates a light path of the optical component of the wavelength λ1 mainly.

The collimation lens 112 is located in +Z side of the light source 111 and turns a beam irradiated from the light source 111 into virtually parallel light.

The modulation optical system 120 is located in +Z side of the collimation lens 112. The modulation optical system 120 modulates the beam irradiated from the optical output device 110 corresponding to each optical component corresponding to the multiple recording layers of the optical disc 15. Here, the modulation optical system 120 includes two lenses (121 and 127), four wavelength dispersion elements (122, 123, 124, and 125), and a spatial light modulation element 126.

The lens 121 is located in +Z side of the collimation lens 112 and turns a beam, which passes through the collimation lens 112, into a convergent light.

Each wavelength dispersion element is a reflection-type diffraction element having the same optical feature. The wavelength dispersion element 122 is located in +Z side of the lens 121 and diffracts a beam, which passes through the lens 121, in the +Z direction.

A light focus P1 of an optical component of the wavelength λ1 included in the beam, which passes through the wavelength dispersion element 123 (hereinafter λ1 beam), a light focus P2 of an optical component of the wavelength λ2 included in the beam, which passes through the wavelength dispersion element 123 (hereinafter λ2 beam), and a light focus P3 of an optical component of the wavelength λ3 included in the beam, which passes through the wavelength dispersion element 123 (hereinafter λ3 beam), are at different positions in the Y direction.

The spatial light modulation element 126 is located in +Z side of the wavelength dispersion element 123 and a liquid crystal, for example as shown in FIG. 4, including multiple zonal transparent electrodes (126a, 126b, 126c,...).

The voltage control circuit 29 applies voltages to each zonal transparent electrode. A penetration probability in the zonal area corresponding to each zonal transparent electrode of the spatial light modulation element 126 changes depending on an applied voltage. Hereinafter it is assumed that an area 126A is the zonal area corresponding to the zonal transparent electrode 126a, an area 126B is the zonal area corresponding to the zonal transparent electrode 126b, and an area 126C is the zonal area corresponding to the zonal transparent electrode 126c.

The area 126A includes the light focus P1, the area 126B includes the light focus P2, and the area 126C includes the light focus P3.

Therefore, the light intensity of the λ1 beam changes based on the voltage applied to the zonal transparent electrode 126a, the light intensity of the λ2 beam changes based on the voltage applied to the zonal transparent electrode 126b, and the light intensity of the λ3 beam changes based on the voltage applied to the zonal transparent electrode 126c. As described above, the spatial light modulation element 126 modulates multiple optical components included in the beam, which pass through the wavelength dispersion element 123, corresponding to respective recording layers of the optical disc 15.

The wavelength dispersion element 124 is located in +Z side of the spatial light modulation element 126 and diffracts a beam, which passes through the spatial light modulation element 126, to -Y direction. The wavelength dispersion element 125 is located in -Y side of the wavelength dispersion element 124 and diffracts a beam, which passes through the wavelength dispersion element 124, to +Z direction.

The lens 127 is located in +Z side of the wavelength dispersion element 125 and turns a beam, which passes through the wavelength dispersion element 125, into virtually parallel light.

The beam splitter 161 is located in +Z side of the lens 127. Most beams, which pass through the lens 127, go through the beam splitter 161 and the beam splitter 161 divaricates a beam returned from the optical disc 15 to -Y direction.

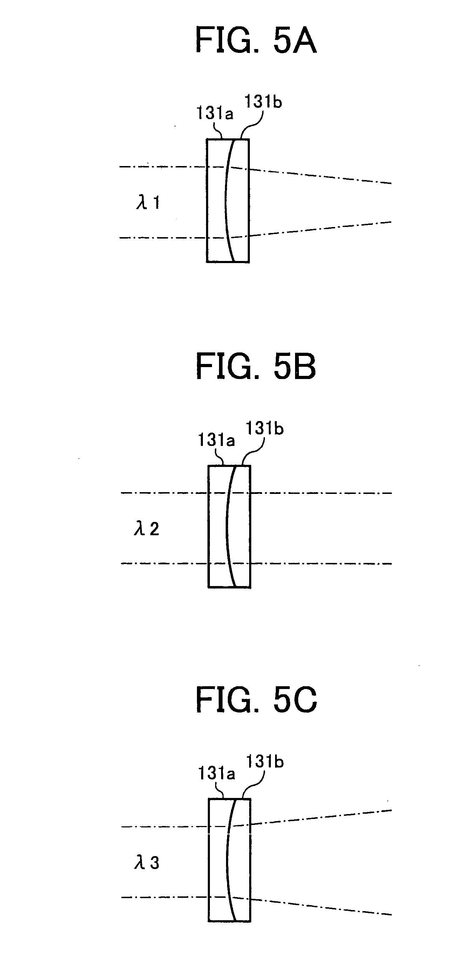

The chromatic aberration lens 131 includes, for example as shown in FIGs. 5a through 5c, two lenses (131a and 131b), whose wavelength dispersion features are different from each other.

The chromatic aberration lens 131 changes an exitance based on a wavelength of a beam. It is assumed that the exitance includes degree of divergence in the case that a beam diverges and a beam converges. The chromatic aberration lens 131 shown in FIGs. 5A and 5C turns the λ1 beam into convergent light by changing the exitance of the λ1 beam and turns the λ3 beam into divergent light by changing the exitance of the λ3 beam. The λ2 beam goes through the chromatic aberration lens 131 shown in FIG. 5B as virtually parallel light.

The objective lens 141 is located in +Z side of the chromatic aberration lens 131 and focuses the beam, which passes through the chromatic aberration lens 131. Divergent beams, virtually parallel beams, and convergent beams are irradiated onto the objective lens 141.
Therefore, each type of beam, which passes through the objective lens 141, converges at different points in the thickness direction of the optical disc 15. Hereinafter, for convenience, the beams converging at different points in the thickness direction of the optical disc 15 are said to form a "linear spot LS."

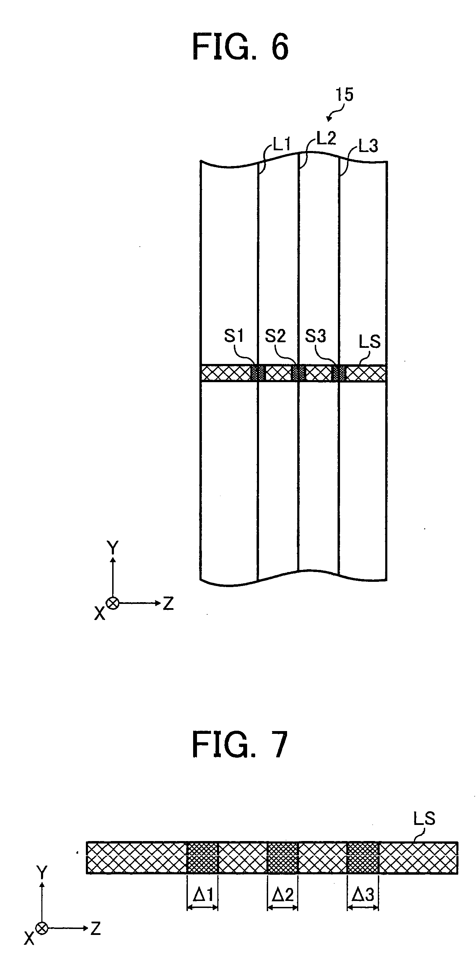

Here, when a focusing process is operated adequately, for example as shown in FIG. 6, the focus point S1 of the λ1 beam is set to lie on or adjacent to the first recording layer L1, the focus point S2 of the λ2 beam is set to lie on or adjacent to the second recording layer L2, and the focus point S1 of the λ3 beam is set to lie on or adjacent to the third recording layer L3 in the linear spot LS.

In the case that, for example as shown in FIG. 7, Δ1 is the length corresponding to the w1, Δ2 is the length corresponding to the w2, and Δ3 is the length corresponding to the w3, Δ1, Δ2, and Δ3 are set so that Δ1, Δ2, and Δ₃ are larger than the maximum permissible error between recording layers (several percent) on the optical disc 15. Therefore, the system is improved in that the focus process does not need to be performed for every individual recording layer.

Referring back to FIG. 2, the detecting system 170 is located in -Y side of the beam splitter 161. The detecting system 170 includes a focus lens 171, a wavelength dispersion element 172, and a detector 173.

The detecting system 170 is located in -Y side of the beam splitter 161 and focuses the beam divaricated by the beam splitter 161.

The wavelength dispersion element 172 is located in -Y side of the detecting system 170 and changes a transmission direction of the beam, which passes through the detecting system 170, based on wavelength. Therefore, a reflected light component Q1 reflected from the first recording layer L1, a reflected light component Q2 reflected from the second recording layer L2, and a reflected light component Q3 reflected from the third recording layer L3 included in the beam, which passes through the detecting system 170, converge at different points.

The detector 173 is located at the focus point of the beam, which passes through the wavelength dispersion element 172.

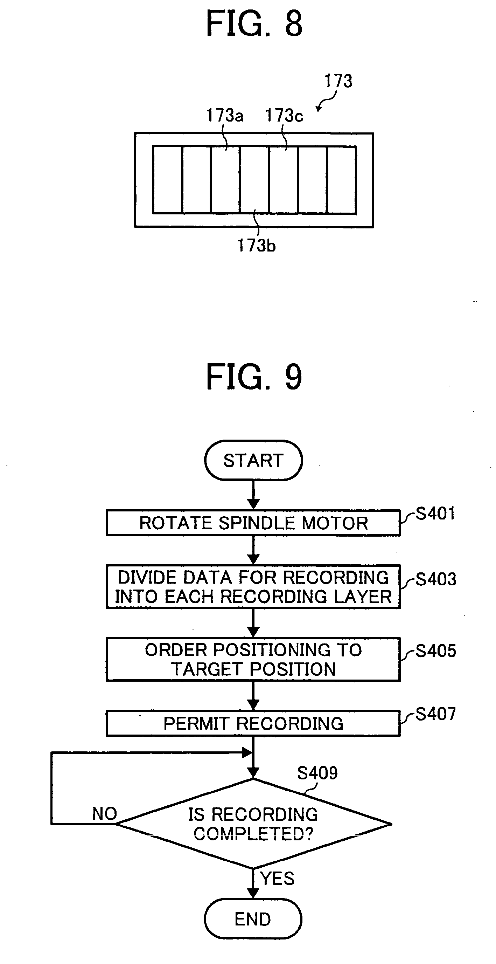

The detector 173, for example as shown in FIG. 8, includes divided detecting elements (or multiple detecting elements), whose face is divided into multiple detecting areas 173a, 173b, 173c (the detector 173 may have ten or more detecting elements). Here, reflected light component Q1 is detected by the detecting area 173a, reflected light component Q2 is detected by the detecting area 173b, and reflected light component Q3 is detected by the detecting area 173c. Therefore, an output signal (a photoelectric conversion signal) output from the detecting area 173a includes the information regarding the first recording layer L1, an output signal (a photoelectric conversion signal) output from the detecting area 173b includes the information regarding the second recording layer L2, and an output signal (a photoelectric conversion signal) output from the detecting area 173c includes the information regarding the third recording layer L3. Each output signal is supplied to the reproduction signal process circuit 28.

The driving system, not shown in FIG. 2, includes a focusing actuator for driving the objective lens 141 finely in the focus direction, which is the axial direction of the objective lens 141, and a tracking actuator for driving the objective lens 141 finely in the tracking direction.

Referring back to FIG. 1, the reproduction signal process circuit 28 obtains reproduction information such as a servo signal (for example, a focus error signal or a track error signal), address information, synchronism information, and an RF signal based on multiple output signals (photoelectric conversion signals) output from the detector 173. Here, the reproduction information regarding the first recording layer L1 is obtained based on the output signal output from the detecting area 173a, the reproduction information regarding the second recording layer L2 is obtained based on the output signal output from the detecting area 173b, and the reproduction information regarding the third recording layer L3 is obtained based on the output signal output from the detecting area 173c. In sum, the reproduction signal process circuit 28 obtains reproduction information regarding multiple recording layers virtually simultaneously. The servo signal obtained above is output to the drive control circuit 26, the address information obtained above is output to the CPU 40, and the synchronism information obtained above is output to the encoder 25, the drive control circuit 26, and so on. Further, the reproduction signal process circuit 28 operates a decoding process and error detecting process regarding the RF signal. In the case that an error is detected, the reproduction signal process circuit 28 operates an error correcting process and stores the corrected RF signal as reproduction data in the buffer RAM 34 via the buffer manager 37, and address information included in the reproduction data is output to the CPU 40.

The drive control circuit 26 generates a driving signal for the driving system in the optical pickup apparatus 23 based on the servo signal output from the reproduction signal process circuit 28 and outputs the driving signal to the optical pickup apparatus 23. Therefore, tracking control and focus control are performed. The drive control circuit 26 generates a driving signal for driving the seek motor 21 and a driving signal for the spindle motor 22 based on an instruction of the CPU 40. Driving signals for each motor are output to the seek motor 21 and the spindle motor 22.

The buffer RAM 34 stores, temporarily, data recorded in the optical disc 15 (record data), data reproduced from the optical disc 15 (reproduction data), and so on. The buffer manager manages input to the buffer RAM 34 and output from the buffer RAM 34.

The encoder 25 draws the record data stored in the buffer RAM 34 via the buffer manager 37 based on an instruction of the CPU 40 and generates a recording signal for recording on each recording layer of the optical disc 15 by modulating the record data and adding an error correction code to the record data. The recording signal is output to the voltage control circuit 29.

The laser control circuit 24 controls the emission power of light source 111 in the optical pickup apparatus 23. Here, for example, the read power for each recording layer is the same, and the laser control circuit 24 controls the emission power so that the emission power is Wp1 when the optical disc 15 is reproduced. The record power for each recording layer (larger than the read power) is also the same, and the laser control circuit 24 controls the emission power so that the emission power is Wp2 (larger than Wp1) when the optical disc 15 is recorded.

The voltage control circuit 29 supplies an applied voltage to the spatial light modulation element 126 in the optical pickup apparatus 23 and controls a function of the spatial light modulation element 126.

Here, when the optical disc 15 is reproduced, the voltage control circuit 29 controls the voltage applied to the zonal transparent electrode 126a so that the λ1 beam, whose power is Wp1, penetrates the spatial light modulation element 126 directly in the case that the reproduction information regarding the first recording layer L1 is obtained, the voltage control circuit 29 controls the voltage applied to the zonal transparent electrode 126b so that the λ2 beam, whose power is Wp1, penetrates the spatial light modulation element 126 directly in the case that the reproduction information regarding the second recording layer L2 is obtained, and the voltage control circuit 29 controls the voltage applied to the zonal transparent electrode 126c so that the λ3 beam, whose power is Wp1, penetrates the spatial light modulation element 126 directly in the case that the reproduction information regarding the third recording layer L3 is obtained.

When the optical disc 15 is recorded, the voltage control circuit 29 controls the voltage applied to the zonal transparent electrode 126a based on the recording signal for the first recording layer L1 in the case that the record data is recorded on the first recording layer L1, the voltage control circuit 29 controls the voltage applied to the zonal transparent electrode 126b based on the recording signal for the second recording layer L2 in the case that the record data is recorded on the second recording layer L2, and the voltage control circuit 29 controls the voltage applied to the zonal transparent electrode 126c based on the recording signal for the third recording layer L3 in the case that the record data is recorded on the third recording layer L3.

In the above case, the voltage control circuit 29 controls the voltage applied to the zonal transparent electrode 126a so that the λ1 beam, whose power is Wp2, penetrates the spatial light modulation element 126 directly in the case that a mark (or pit) is formed on the first recording layer L1, the voltage control circuit 29 controls the voltage applied to the zonal transparent electrode 126b so that the λ2 beam, whose power is Wp2, penetrates the spatial light modulation element 126 directly in the case that a mark (or pit) is formed on the second recording layer L2, and the voltage control circuit 29 controls the voltage applied to the zonal transparent electrode 126c so that the λ3 beam, whose power is Wp2, penetrates the spatial light modulation element 126 directly in the case that a mark (or pit) is formed on the third recording layer L3.

The voltage control circuit 29 controls the voltage applied to the zonal transparent electrode 126a so that the λ1 beam's power is Wp1 in the case that a space is formed on the first recording layer L1, the voltage control circuit 29 controls the voltage applied to the zonal transparent electrode 126b so that the λ2 beam's power is Wp1, in the case that a space is formed on the second recording layer L2, and the voltage control circuit 29 controls the voltage applied to the zonal transparent electrode 126c so that the λ3 beam's power is Wp 1 in the case that a space is formed on the third recording layer L3.

If the number of target recording layers is one or two, the voltage control circuit 29 controls the applied voltage, which is the same as the voltage during recording a space, applying to the zonal transparent electrode(s) corresponding to a recording layer(s), which is not a target recording layer(s).

The interface 38 is a bidirectional interface for communicating with an upper apparatus 90, for example a PC, and complies with a standard interface such as ATAPI (AT Attachment Packet Interface), SCSI (Small Computer System Interface), USB (Universal Serial Bus) and so on.

The flash memory 39 stores various programs described by a readable code for CPU 40, recording strategies, an attribute of the spatial light modulation element 126, an emission attribute of the light source 111 and so on. The flash memory also stores information for applying voltages for each zonal transparent electrode during recording and reproducing.

The CPU 40 controls motion of each part described above based on the program stored in the flash memory 39 and stores control data in the RAM 41 or the buffer RAM 34.

### -Recording process-

A recording process in the case where the upper apparatus 90 requests recording user data from the optical disc apparatus 20 is described below with reference to FIG. 9. The flow chart of FIG. 9 corresponds to a processing algorithm carried out by the CPU 40.

When the optical disc apparatus 20 receives a command for the request of recording, a start address of a program corresponding to FIG. 9, which is one of the programs stored in flash memory 39, is set on program counter of the CPU 40 and the recording process starts.

In the first step S401, the CPU 40 instructs the drive control circuit 26 to drive the optical disc 15 at a predetermined linear velocity (or angular velocity) and notifies the reproduction signal process circuit 28, the laser control circuit 24, and so on, that the optical disc apparatus 20 received the command for recording from the upper apparatus 90.
Therefore the laser control circuit 24 controls the emission power so that the emission power of the light source 111 is Wp1.

The CPU 40 identifies the target recording layer for recording based on the command for recording and notifies the reproduction signal process circuit 28, the encoder 25, the laser control circuit 24, and so on, of a result of identifying. Here, it is assumed that the user data is recorded on the first recording layer L1, the second recording layer L2, and the third recording layer L3.

In the next step S403, the CPU 40 divides the user data (the record data) stored in the buffer RAM 34 sent from the upper apparatus 90 into user data for recording on the first recording layer L1, user data for recording on the second recording layer L2, and the third recording layer L3.

In the next step S405, the CPU 40 instructs the drive control circuit 26 so that an optical spot is formed at or adjacent to a target position corresponding to a specified address. Therefore, a seek operation is operated, but if the seek operation is unnecessary, the step S405 may be skipped.

In the next step S407, the CPU 40 permits recording. Therefore, the laser control circuit 24 controls the emission power so that the emission power of the light source 111 is Wp2. The CPU 40 records the user data on each recording layer via the encoder 25 and the voltage control circuit 29.

In the next step S409, the CPU 40 judges whether the recording is finished or not. In the case that the recording is not finished, the judgment indicates NO and the CPU 40 judges again the predetermined later time. In the case that the recording is finished, the judgment indicates YES, the CPU 40 notifies the upper apparatus 90 of the completion of the recording and finishes the recording process. Here, the recording process is finished quickly because the recording on each recording layer is operated virtually simultaneously.

### -Reproducing process-

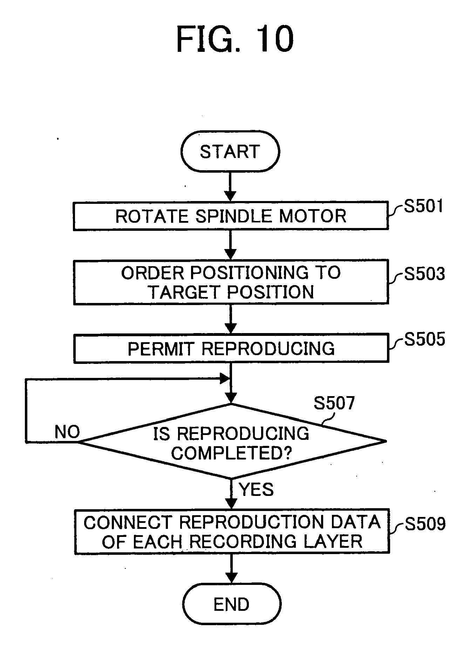

A reproducing process in the case that the upper apparatus 90 requests reproducing user data from the optical disc apparatus 20 is described below with reference to FIG. 10. The flow chart of FIG. 10 corresponds to a processing algorithm carried out by the CPU 40.

When the optical disc apparatus 20 receives a command for the request of reproducing, a start address of a program corresponding to FIG. 10, which is one of the programs stored in flash memory 39, is set on program counter of the CPU 40 and the reproducing process starts.

In the first step S501, the CPU 40 instructs the drive control circuit 26 to drive the optical disc 15 at a predetermined linear velocity (or angular velocity) and notifies the reproduction signal process circuit 28, the laser control circuit 24, and so on, that the optical disc apparatus 20 received the command for reproducing from the upper apparatus 90. Therefore, the laser control circuit 24 controls the emission power so that the emission power of the light source 111 is Wp1.

The CPU 40 identifies the target recording layer for reproducing based on the command for reproducing and notifies the reproduction signal process circuit 28, the voltage control circuit 29, and so on, of a result of identifying. Here, it is assumed that the user data is reproduced from the first recording layer L1, the second recording layer L2, and the third recording layer L3.

In the next step S503, the CPU 40 instructs the drive control circuit 26 so that an optical spot is formed at or adjacent to a target position corresponding to a specified address. Therefore a seek operation is performed, but if the seek operation is unnecessary, the step S503 may be skipped.

In the next step S505, the CPU 40 permits reproducing. Therefore, the CPU 40 reproduces the user data on each recording layer via the reproduction signal process circuit 28.

In the next step S507, the CPU 40 judges whether the reproducing is finished or not. In the case that the reproducing is not finished, the judgment indicates NO and the CPU 40 judges again the predetermined later time. In the case that the reproducing is finished, the judgment indicates YES, and the reproducing process goes to the next step S509.

In this step S509, the CPU 40 links reproduction data reproduced from the first recording layer L1. reproduction data reproduced from the second recording layer L2, and reproduction data reproduced from the third recording layer L3, and sends the linked reproduction data forward to the upper apparatus 90, and the CPU 40 finishes the reproducing process. Here, the reproducing process is finished quickly because the reproducing on each recording layer is performed virtually simultaneously.

As evident from the description above, a processing device includes the reproduction signal process circuit 28, the voltage control circuit 29, the CPU 40 and the program executed by the CPU 40 in the optical disc apparatus 20 according to the first embodiment. Hardware may also execute at least a part of processes executed by the program of CPU 40 or whole parts thereof.

As described above, the optical pickup apparatus 23 includes the optical output device 110 including the multiple wavelength source, the modulation optical system 120 modulating multiple optical components individually, which correspond to respective recording layers of the optical disc 15 and are included in the beam output from the optical output device 110, the chromatic aberration lens 131 changes an exitance of the beam, which passes through the modulation optical system 120, based on a wavelength of the beam, the objective lens 141 focuses the beam, which passes through the chromatic aberration lens 131 on the disc 15, the detecting system 170 separating the optical components reflected by respective recording layers of the optical disc 15. Therefore, the first embodiment irradiates multiple recording layers of the optical disc 15 with beams simultaneously and detects multiple beams reflected by the respective recording layers of the optical disc 15 individually without increasing cost and increasing the size of the optical pickup apparatus 23.

In the first embodiment, even in the case where points of each recording layer are fluctuated as a result of manufacturing error and so on, the optical disc apparatus 20 does not need to perform focus control for each recording layer. In the illustrated embodiment, all the optical disc apparatus 20 has to do is perform focus control for any one of the recording layers, because Δ1, Δ2, and Δ3 in the linear spot LS are set so that Δ1, Δ2, and Δ3 are larger than the maximum permissible error between recording layers (several percent) on the optical disc 15.

The optical disc apparatus 20 according to the first embodiment accesses multiple recording layers of the optical disc simultaneously without increasing cost and without increasing the size of the optical pickup apparatus 20 because the optical disc apparatus 20 according to the first embodiment irradiates multiple recording layers of the optical disc 15 simultaneously and detects multiple beams reflected by the respective recording layers of the optical disc 15.

The optical disc apparatus 20 according to the first embodiment records quickly on the optical disc, because the optical disc apparatus 20 according to the first embodiment records on the first recording layer L1, the second recording layer L2, and the third recording layer L3 virtually simultaneously.

The optical disc apparatus 20 according to the first embodiment quickly reproduces data from the optical disc, because the optical disc apparatus 20 according to the first embodiment reproduces data from the first recording layer L1, the second recording layer L2, and the third recording layer L3 virtually simultaneously.

In sum, the first embodiment enhances recording and reproducing speed on a pit recording system, which is better than a hologram recording system regarding reliability and repeatability.

And the optical disc apparatus 20 according to the first embodiment has good optical efficiency and it has a reduced size because multiple light sources are unnecessary for the optical disc apparatus 20 according to the first embodiment.

It is enough for the optical disc apparatus 20 according to the first embodiment that materials of each recording layer are the same and the first embodiment decreases the cost of the optical disc because a wavelength range of beams irradiated from the light source is from a few nm to 20 nm.

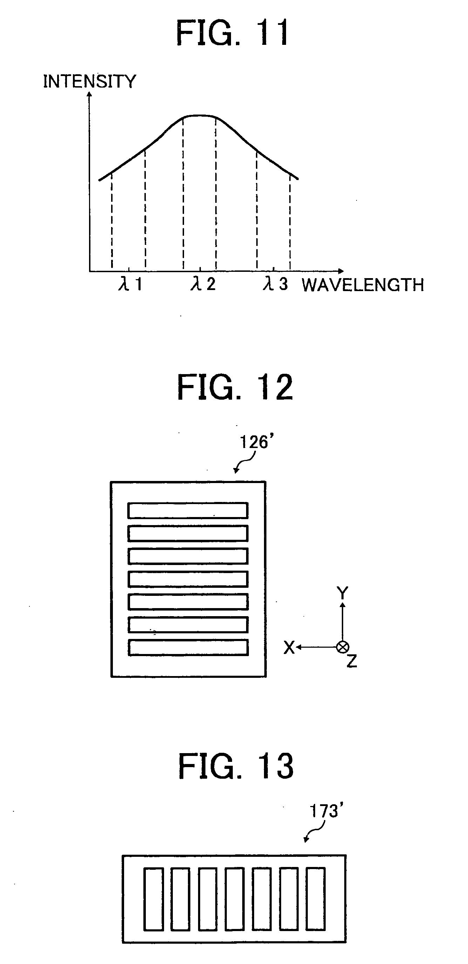

Further, the light source irradiates a beam having three wavelength peaks, whose spectrum are wavelength λ1, wavelength λ2, and wavelength λ3 according to the first embodiment of the prevent invention. However, the present invention is not limited to such a light source. The first embodiment may use, for example, a beam not having three wavelength peaks, whose spectrum are wavelength λ1, wavelength λ2, and wavelength λ3 shown in FIG. 11, instead of the light source 111. In above case, the first embodiment may use, for example as shown in FIG. 12, the spatial light modulation element 126' instead of the spatial light modulation element 126. The spatial light modulation element 126' narrows the width of each zonal transparent electrode and includes occluded areas between each zonal transparent electrode. Therefore, the spatial light modulation element 126' produces a pseudo-beam having three wavelength peaks, whose spectrum are wavelength λ1, wavelength λ2, and wavelength λ3.

In above case, the first embodiment may use, for example as shown in FIG. 13, the detector 173' instead of the detector 173. The detector 173' narrows the width of each detecting area (or detecting element) and includes spaces between each detecting area so that fluctuation ranges at positions of each recording layer are within the widths of each detecting area.

As described above, even in the case that points of each recording layer are fluctuated, the optical disc apparatus 20 does not need to perform focus control with respect to each recording layer. All the optical disc apparatus 20 has to do is perform focus control with respect to just one of the recording layers, because the width of the zonal transparent electrode of the spatial light modulation element 126 and the widths of the detecting areas of the detector are set adequately.

In the first embodiment, the optical disc apparatus 20 may use a divided mirror element as the spatial light modulation element 126.

In the first embodiment, the optical disc apparatus 20 may use a prism or a photonic crystal as the spatial light modulation element 126.

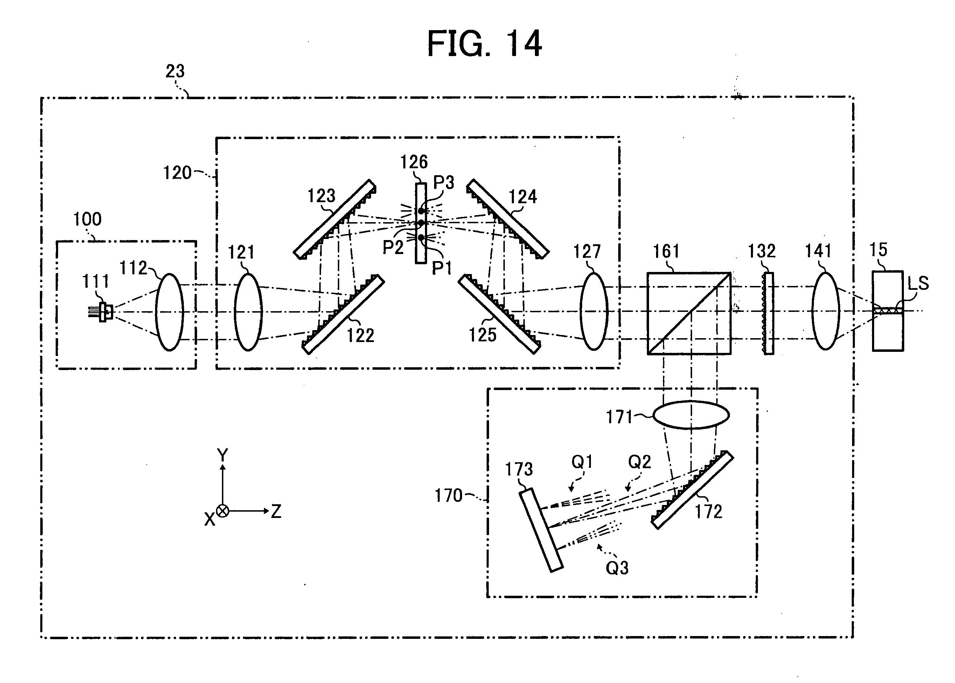

And, in the first embodiment, the optical disc apparatus 20 may use, for example as shown in FIG. 14, a wavelength dispersion element 132 instead of the chromatic aberration lens 131. The wavelength dispersion element 132 is a transmission-type diffraction element having a lens function. The wavelength dispersion element having a lens function functions the same as the chromatic aberration lens 131 since a diffracted light generated by a diffraction grating has different diffraction angles depending on wavelength.

And, in the first embodiment, the optical disc apparatus 20 may use a photonic crystal instead of the chromatic aberration lens 131. The photonic crystal forms a long linear spot even from a beam having a narrow wavelength spectrum, since a diffraction grating and the photonic crystal have a wavelength dispersion feature, which is bigger than that of the chromatic aberration lens 131 made by normal glass material.

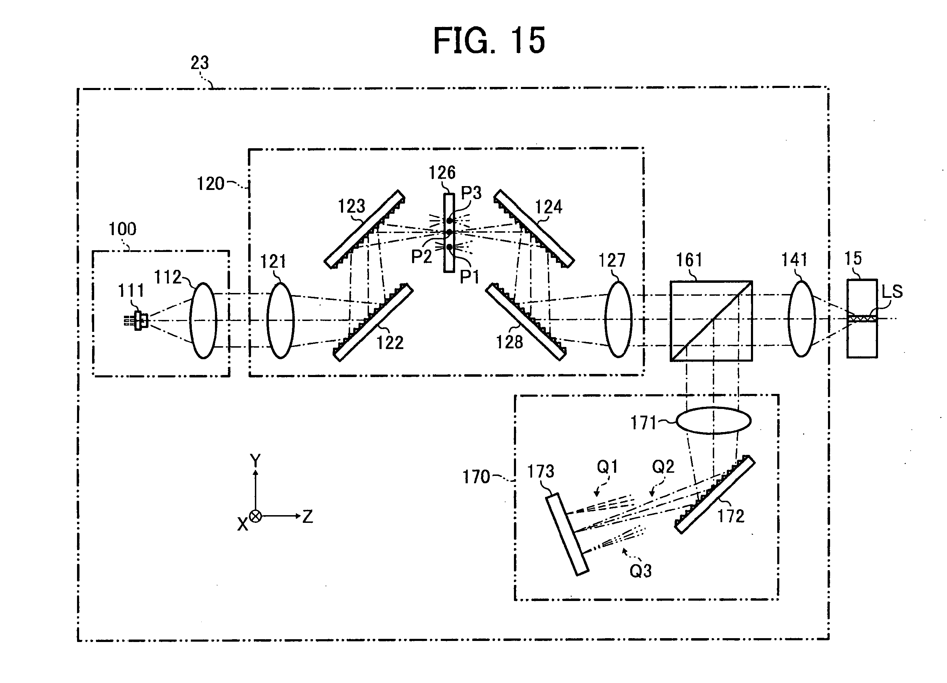

And, in the first embodiment, the optical disc apparatus 20 may use, for example as shown in FIG. 15, a wavelength dispersion element 128 having a lens function, instead of the wavelength dispersion element 125. Therefore, the chromatic aberration lens 131 is unnecessary in the first embodiment. In sum, a pattern of the diffraction grating may be set adequately and the wavelength dispersion element 125 may be added to a function of the chromatic aberration lens 131 or the wavelength dispersion element 132. For example, a diffraction light, whose wavelength is λ1, gets through the objective lens 141 as a convergent light and a diffraction light, whose wavelength is λ3, gets through the objective lens 141 as a divergent light depending on a wavelength dispersion feature of the wavelength dispersion element 128, when the lens 127 is adjusted so that a diffraction light, whose wavelength is λ2, gets through the objective lens 141 as parallel light. In addition, it is enough that any one of the four wavelength dispersion elements in the modulation optical system 120 is the wavelength dispersion element having a lens function. Therefore, the first embodiment decreases the number of components and the cost, and reduces the size of the optical disc apparatus 20.

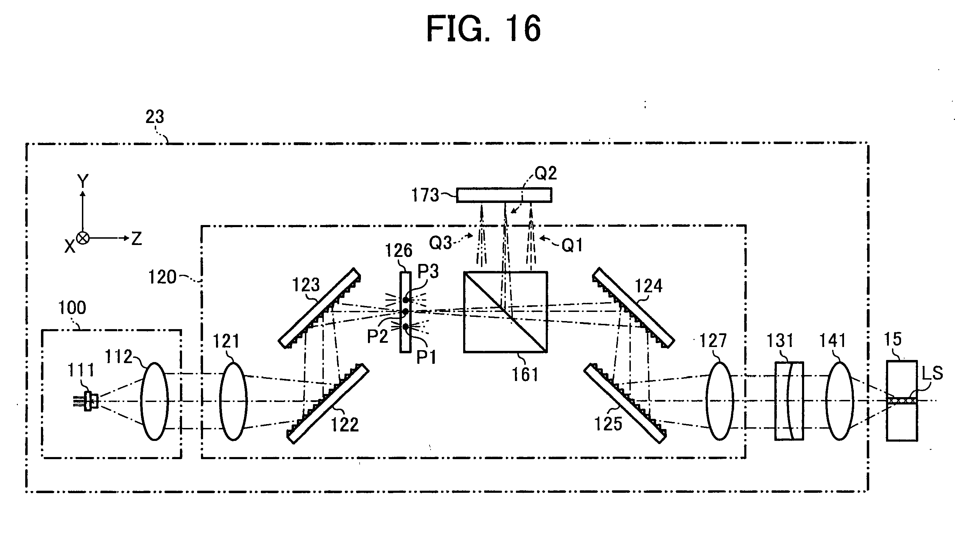

And, in the first embodiment, the optical disc apparatus 20, for example as shown in FIG. 16, may have the beam splitter 161 located between the spatial light modulation element 126 and the wavelength dispersion element 124, and locate the detector 173 in +Y side of the beam splitter 161. In above case, the optical disc apparatus 20 may use the wavelength dispersion element 132 instead of the chromatic aberration lens 131. Therefore, the focus lens 171 and the wavelength dispersion element 172 are unnecessary in the first embodiment and the first embodiment decreases cost and reduces the size of the optical disc apparatus 20. And the optical disc apparatus 20 may use the wavelength dispersion element 128 instead of the wavelength dispersion element 125. Therefore, the chromatic aberration lens 131 may be unnecessary in the first embodiment, and the first embodiment decreases cost and reduces the size of the optical disc apparatus 20.

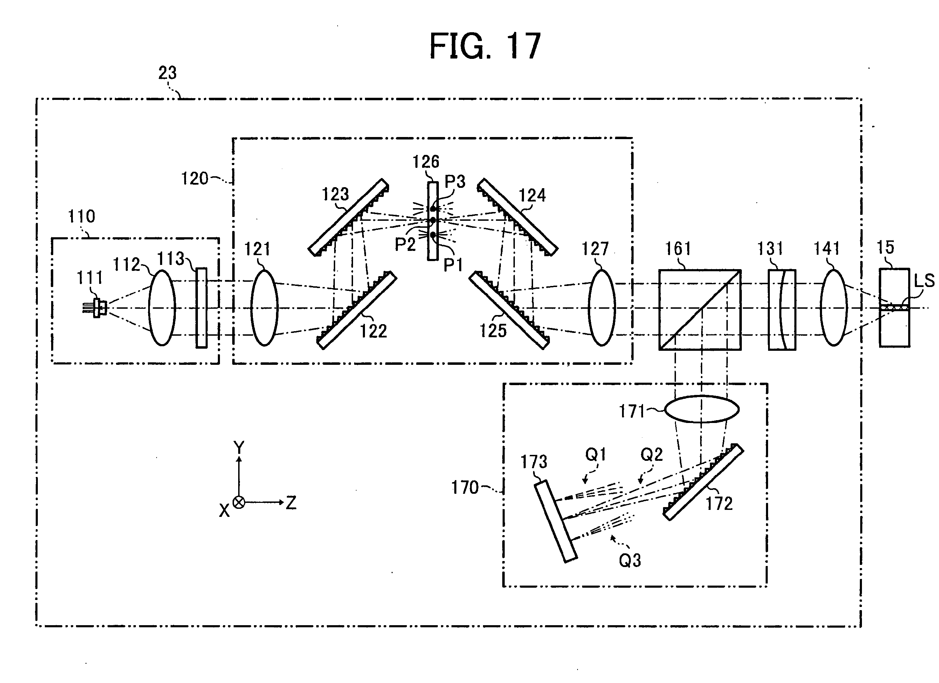

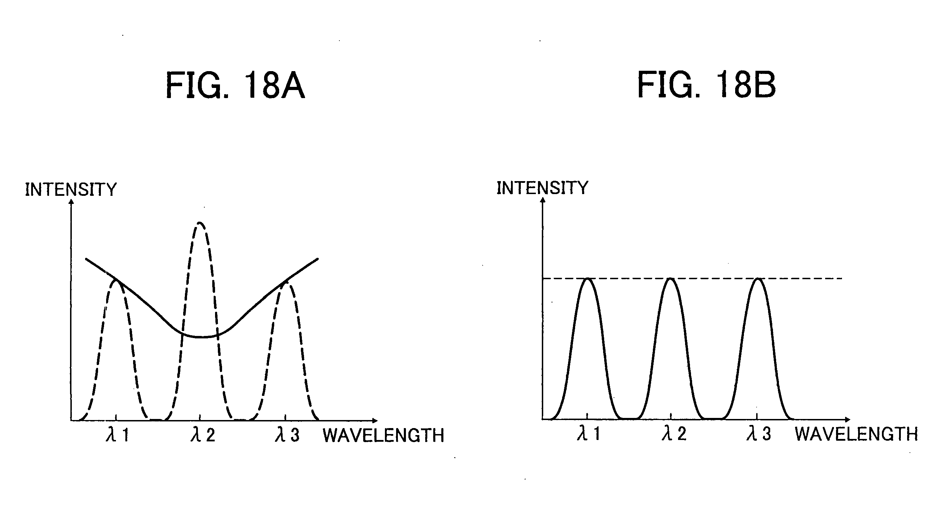

And, in the first embodiment, the optical disc apparatus 20, for example as shown in FIG. 17, may allocate a wavelength filter 113 in +Z side of the beam splitter 112 for equalizing heights of each peak of a wave spectrum of a beam irradiated from the light source 111 in the case that heights of each peak are widely different. The wavelength filter 113, for example as shown in FIG. 18A, has a feature so that the wavelength filter 113 decreases a height of the peak 2, which is lower than those of the peak 1 and peak 3, in the case that the height of the peak 2 is higher than those of the peak 1 and peak 3 shown in FIG. 3. Therefore, heights of each peak of a wave spectrum of the beam after passing through the wavelength filter 113 are the same as shown in FIG. 18B. In addition, it is enough that the wavelength filter 113 is located on an approach route.

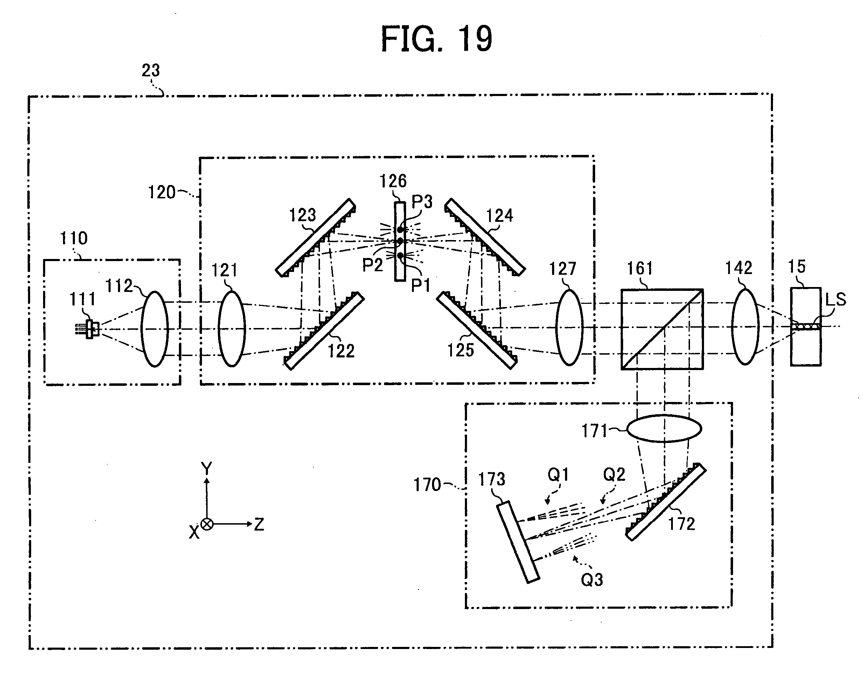

And, in the first embodiment, the optical disc apparatus 20, for example as shown in FIG. 19, may use the objective lens 142 having a chromatic aberration the same as the chromatic aberration lens 131 instead of the objective lens 141. Therefore, the chromatic aberration lens 131 is unnecessary in the first embodiment, and the first embodiment decreases cost and reduces the size of the optical disc apparatus 20.

And, in the first embodiment, it is even enough that read powers for each recording layer are not the same. In above case, the highest read power among multiple read powers is Wp1. In addition, a voltage applied to the zonal transparent electrode 126a is controlled so that a power of the λ1 beam, which passes through the spatial light modulation element 126, is a read power of the first recording layer L1 when the optical disc apparatus 20 obtains the reproduction information regarding the first recording layer L1, a voltage applied to the zonal transparent electrode 126b is controlled so that a power of the λ2 beam, which passes through the spatial light modulation element 126, is a read power of the second recording layer L2 when the optical disc apparatus 20 obtains the reproduction information regarding the second recording layer L2, and a voltage applied to the zonal transparent electrode 126c is controlled so that a power of the λ3 beam, which passes through the spatial light modulation element 126, is a read power of the third recording layer L3 when the optical disc apparatus 20 obtains the reproduction information regarding the third recording layer L3.

In the first embodiment, the record powers for each recording layer need not be the same. In the above case, the highest record power among multiple record powers is Wp2. In addition, a voltage applied to the zonal transparent electrode 126a is controlled so that a power of the λ1 beam, which passes through the spatial light modulation element 126, is a record power of the first recording layer L1 when the optical disc apparatus 20 forms a mark (or pit) on the first recording layer L1, a voltage applied to the zonal transparent electrode 126b is controlled so that a power of the λ2 beam, which passes through the spatial light modulation element 126, is a record power of the second recording layer L2 when the optical disc apparatus 20 forms a mark (or pit) on the second recording layer L2, and a voltage applied to the zonal transparent electrode 126c is controlled so that a power of the λ3 beam, which passes through the spatial light modulation element 126, is a record power of the third recording layer L3 when the optical disc apparatus 20 forms a mark (or pit) on the third recording layer L3.

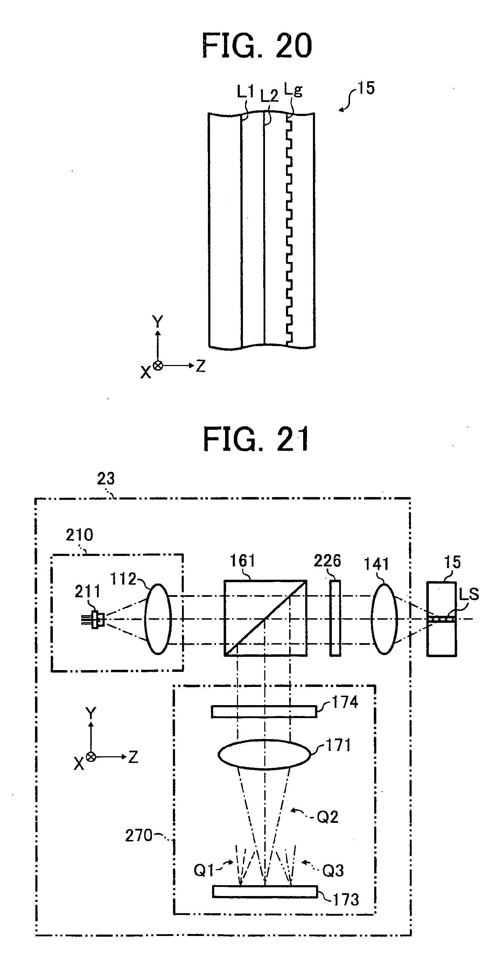

In the first embodiment, the optical disc apparatus 20 operates the recording process and reproducing process simultaneously. For example, when the optical disc includes a servo layer Lg instead of the third recording layer shown in FIG. 20, the optical disc apparatus 20 operates the recording process to the first recording layer L1 and the second recording layer L2 and reproducing process, which reproduces reproduction information from the servo layer Lg. In above case, the emission power of the light source is controlled so that the emission power is Wp2.

And a voltage applied to the zonal transparent electrode 126a is controlled so that the λ1 beam, whose power is Wp2, passes through the spatial light modulation element 126 directly when the optical disc apparatus 20 forms a mark (or pit) on the first recording layer L1, and a voltage applied to the zonal transparent electrode 126a is controlled so that a power of the λ1 beam, which passes through the spatial light modulation element 126, is Wp1 when the optical disc apparatus 20 forms a space on the first recording layer L1.

An applied voltage to the zonal transparent electrode 126b is controlled so that the λ2 beam, whose power is Wp2, passes through the spatial light modulation element 126 directly, when the optical disc apparatus 20 forms a mark (or pit) on the second recording layer L2, and a voltage applied to the zonal transparent electrode 126a is controlled so that a power of the λ2 beam, which passes through the spatial light modulation element 126, is Wp1 when the optical disc apparatus 20 forms a space on the second recording layer L2.

A voltage applied to the zonal transparent electrode 126c is controlled so that a power of the λ3 beam, which passes through the spatial light modulation element 126, is Wp1.

### -Second embodiment -

A second embodiment of the present invention is described below with reference to FIGs. 21 through 26B.

The optical pickup apparatus in the second embodiment uses an optical output device 210 instead of the optical output device 110 in the first embodiment, uses a spatial light modulation element 226 instead of the chromatic aberration lens 131, uses a detecting system 270 instead of the detecting system 170, and abbreviates the modulation optical system 120 shown in FIG. 21. Therefore, the following discussion will mainly describe the differences from the first embodiment, using the same reference symbols as in the first embodiment for the same or equivalent parts as in the first embodiment, and descriptions of the same parts may be omitted.

The optical output device 210 includes a light source 211 irradiating a beam having a single wavelength and a collimation lens 112. The collimation lens is located in +Z side of the light source 211 and turns a beam irradiated from the light source 211 into virtually parallel light.

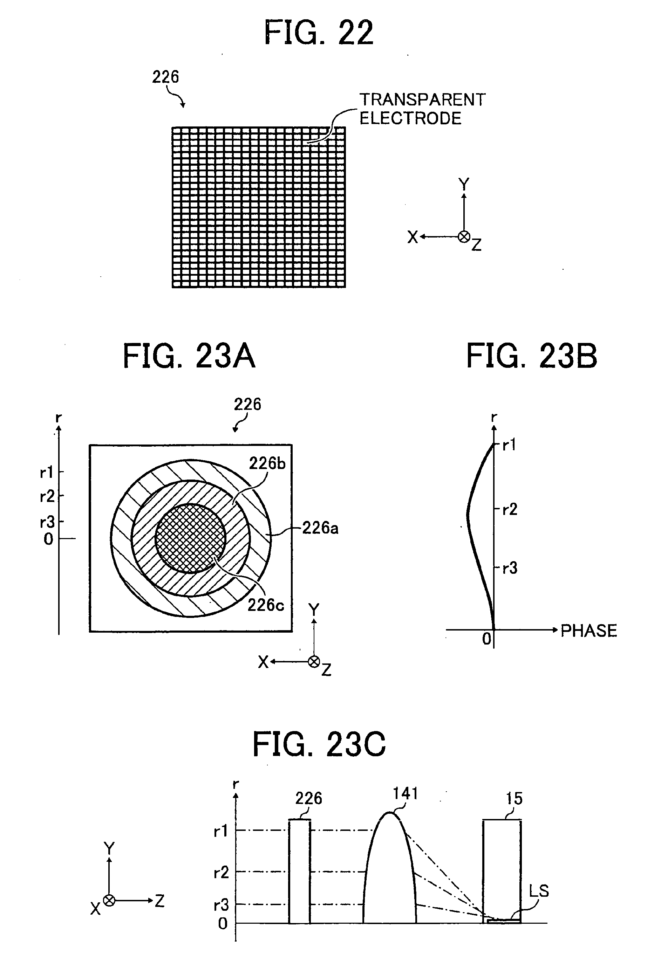

The spatial light modulation element 226 is a liquid crystal, for example shown in FIG. 22, including multiple transparent electrodes located in a matrix. Here, the spatial light modulation element 226 includes three areas (area 226a, area 226b, and area 226c) shown in FIG. 23A. The area 226c is a circular area adjacent to a center of the spatial light modulation element 226, the area 226b is a ring-shaped area contacting the area 226c, and the area 226a is a ring-shaped area contacting the area 226b. The voltage control circuit 29 applies voltages to multiple transparent electrodes corresponding to each area so that a beam, which passes through the spatial light modulation element 226, has a consecutive spherical aberration-shaped wave aberration, which is rotationally-symmetric as shown in FIG. 23B. Therefore, the linear spot LS is formed on the optical disc 15 via the objective lens 141 shown in FIG. 23C. In above case, when a focusing process is performed adequately, a beam which passes through the area 226a converges on or adjacent to the first recording layer L1, a beam which passes through the area 226b converges on or adjacent to the second recording layer L2, and a beam which passes through the area 226c converges on or adjacent to the third recording layer L3.

The spatial light modulation element 226 modulates an optical component focused on or adjacent to the first recording layer by controlling a voltage applied to multiple transparent electrodes corresponding to the area 226a (hereinafter may be called first transparent electrode group), modulates an optical component focused on or adjacent to the second recording layer by controlling a voltage applied to multiple transparent electrodes corresponding to the area 226b (hereinafter may be called second transparent electrode group), and modulates an optical component focused on or adjacent to the third recording layer by controlling a voltage applied to multiple transparent electrodes corresponding to the area 226c (hereinafter may be called third transparent electrode group). In sum, the spatial light modulation element 226 modulates multiple optical components focused on or adjacent to the first recording layer, the second recording layer, and the third recording layer individually.

Here, when the optical disc 15 is reproduced, the voltage control circuit 29 controls the voltage applied to the first transparent electrode group so that a power of the optical component focused on or adjacent to the first recording layer is Wp1, where the reproduction information regarding the first recording layer L1 is obtained, the voltage control circuit 29 controls the voltage applied to the second transparent electrode group so that a power of the optical component focused on or adjacent to the second recording layer is Wp1, where the reproduction information regarding the second recording layer L2 is obtained, and the voltage control circuit 29 controls the voltage applied to the third transparent electrode group so that a power of the optical component focused on or adjacent to the third recording layer is Wp1, where the reproduction information regarding the third recording layer L3 is obtained.

When the optical disc 15 is recorded, the voltage control circuit 29 controls the voltage applied to the first transparent electrode group based on the recording signal for the first recording layer L1 in the case that the record data is recorded on the first recording layer L1, the voltage control circuit 29 controls the voltage applied to the second transparent electrode group based on the recording signal for the second recording layer L2 in the case that the record data is recorded on the second recording layer L2, and the voltage control circuit 29 controls the voltage applied to the third transparent electrode group based on the recording signal for the third recording layer L3 in the case that the record data is recorded on the third recording layer L3.

In above case, the voltage control circuit 29 controls the voltage applied to the first transparent electrode group so that a power of the optical component focused on or adjacent to the first recording layer L1 is Wp2 in the case that a mark (or pit) is formed on the first recording layer L1, the voltage control circuit 29 controls the voltage applied to the second transparent electrode group so that a power of the optical component focused on or adjacent to the second recording layer L2 is Wp2 in the case that a mark (or pit) is formed on the second recording layer L2, and the voltage control circuit 29 controls the applied voltage applying to the third transparent electrode group so that a power of the optical component focused on or adjacent to the third recording layer L3 is Wp2 in the case that a mark (or pit) is formed on the third recording layer L3.

In above case, the voltage control circuit 29 controls the voltage applied to the first transparent electrode group so that a power of the optical component focused on or adjacent to the first recording layer L1 is Wp1 in the case that a space is formed on the first recording layer L1, the voltage control circuit 29 controls the voltage applied to the second transparent electrode group so that a power of the optical component focused on or adjacent to the second recording layer L2 is Wp1 in the case that a space is formed on the second recording layer L2, and the voltage control circuit 29 controls the voltage applied to the third transparent electrode group so that a power of the optical component focused on or adjacent to the third recording layer L3 is Wp1 in the case that a space is formed on the third recording layer L3.

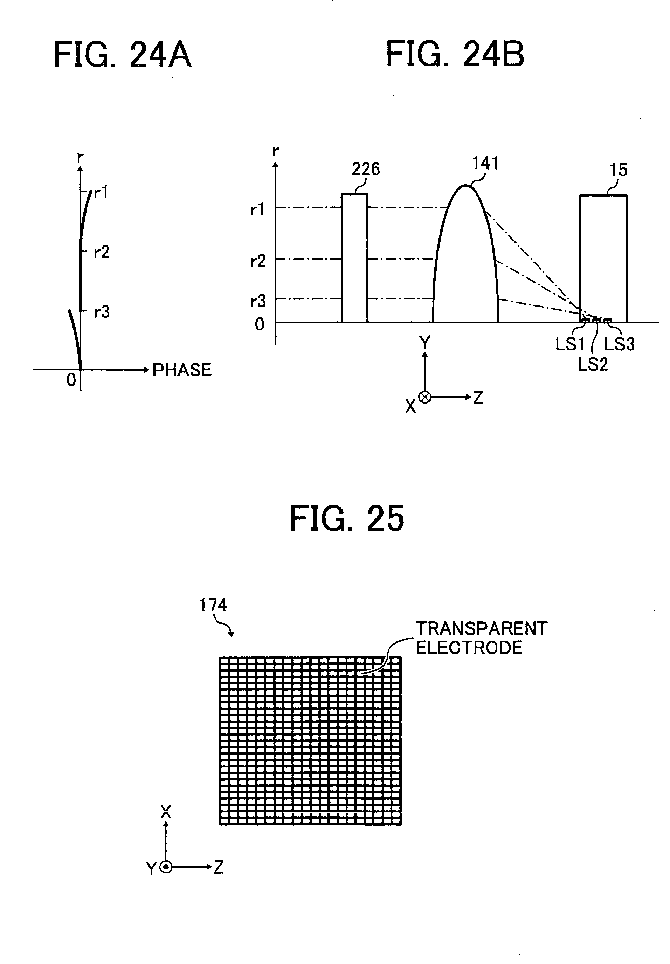

The voltage control circuit 29 may control, for example as shown in FIG. 24A, the voltage applied to each transparent electrode group so that a wave surface of the optical component focused on or adjacent to the first recording layer L1 is a convergent wave surface, a wave surface of the optical component focused on or adjacent to the second recording layer L2 is a parallel wave surface, and a wave surface of the optical component focused on or adjacent to the third recording layer L3 is a divergent wave surface. In sum, the spatial light modulation element 226 may add a discrete spherical aberration-shaped wave aberration to a beam passing through the spatial light modulation element 226. In above case, the linear spot LS is formed by a linear spot LS1 formed on or adjacent to the first recording layer L1, a linear spot LS2 formed on or adjacent to the second recording layer L2, and a linear spot LS3 formed on or adjacent to the third recording layer L3, as shown in FIG. 24B.

The spatial light modulation element 226 modulates the linear spot LS1 by controlling the voltage applied to the first transparent electrode group for changing an aberration shape, and the spatial light modulation element 226 changes the length of the linear spot LS1 based on a phase shape added at the area 226a.

The spatial light modulation element 226 modulates the linear spot LS2 by controlling the voltage applied to the second transparent electrode group for changing an aberration shape, and the spatial light modulation element 226 changes the length of the linear spot LS2 based on a phase shape added at the area 226b.

The spatial light modulation element 226 modulates the linear spot LS3 by controlling the voltage applied to the third transparent electrode group for changing an aberration shape, and the spatial light modulation element 226 changes the length of the linear spot LS3 based on a phase shape added at the area 226c.

The optical disc apparatus 20 does not need to perform focus control with respect to each recording layer. In the illustrated embodiment, the optical disc apparatus 20 may perform focus control for just one of the recording layers, as in the first embodiment, because the length of each linear spot is set to be larger than the maximum permissible error between recording layers (several percent) on the optical disc 15.

The detecting system 270 includes a ring-shaped element 174, a focus lens 171, and a detector 173.

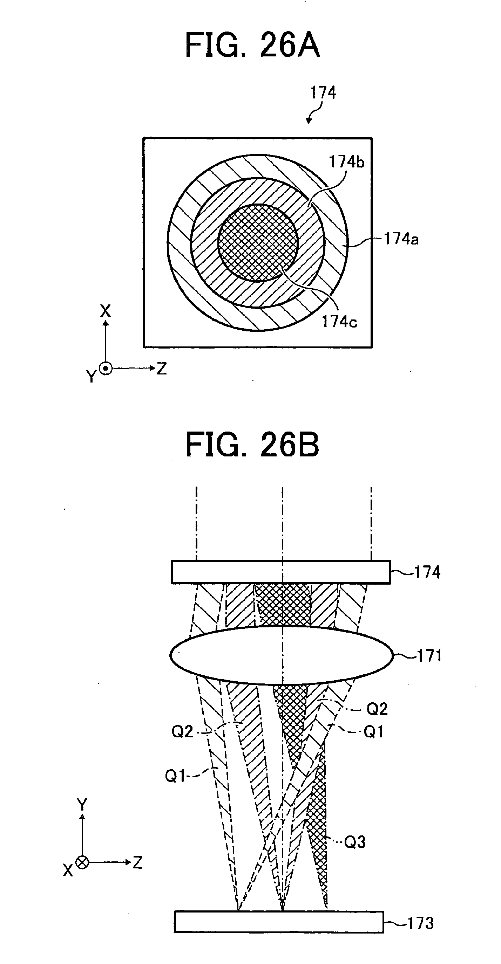

The ring-shaped element 174 is located in -Y side of the beam splitter 161. The ring-shaped element 174 is a liquid crystal element, for example as shown in FIG. 25, including multiple transparent electrodes located in a matrix. Here, the ring-shaped element 174 includes three areas (area 174a, area 174b, and area 174c) as shown in FIG. 26A. The area 174c is a circular area adjacent to a center of the ring-shaped element 174, the area 174b is a ring-shaped area contacting the area 174c, and the area 174a is a ring-shaped area contacting the area 174b. The reflected light component Q1 included in the beam reflected from the first recording layer L1 gets through the area 174a. The reflected light component Q2 included in the beam reflected from the second recording layer L2 gets through the area 174b, and the reflected light component Q3 included in the beam reflected from the third recording layer L3 gets through the area 174c. The voltage control circuit 29 applies a voltage to multiple transparent electrodes corresponding to the respective areas so that the beam is added to a phase having a different gradient on each area.

Therefore, the reflected light component Q1, the reflected light component Q2, and the reflected light component Q3 are separated by the ring-shaped element 174 shown in FIG. 26B.

The focus lens 171 is located in -Y side of the ring-shaped element 174 and focuses the beam, which passes through the ring-shaped element 174. The detector is located so that the reflected light component Q1 is detected at the detecting area 173 a, the reflected light component Q2 is detected at the detecting area 173b, and the reflected light component Q3 is detected at the detecting area 173c.

The optical disc apparatus 20 according to the second embodiment performs the recording process and the reproducing process as in the first embodiment.

As described above, the optical pickup apparatus 23 includes the optical output device 210 including the single wavelength source, the spatial light modulation element 226 dividing the beam irradiated from the optical output device 210 into multiple optical components corresponding to multiple recording layers of the optical disc 15 and adding discrete or consecutive spherical aberration-shaped wave aberration to multiple optical components, the objective lens 141 focuses the beam, which passes through the spatial light modulation element 226 on the optical disc 15, the detecting system 270 separating each optical component reflected from multiple recording layers of the optical disc 15 and detecting each optical component individually. Therefore, the optical pickup apparatus 23 according to the second embodiment has an effect the same as the first embodiment.

The second embodiment provides a uniform sensitivity characteristic and a signal characteristic between the recording layers, advances signal quality and eliminates influence of chromatic aberration.

The optical disc apparatus 20 according to the second embodiment includes the optical pickup apparatus 23. Therefore, the optical disc apparatus 20 according to the second embodiment has an effect the same as the first embodiment.

In the second embodiment, the optical disc apparatus 20 may use the divided mirror element as the ring-shaped element 174.

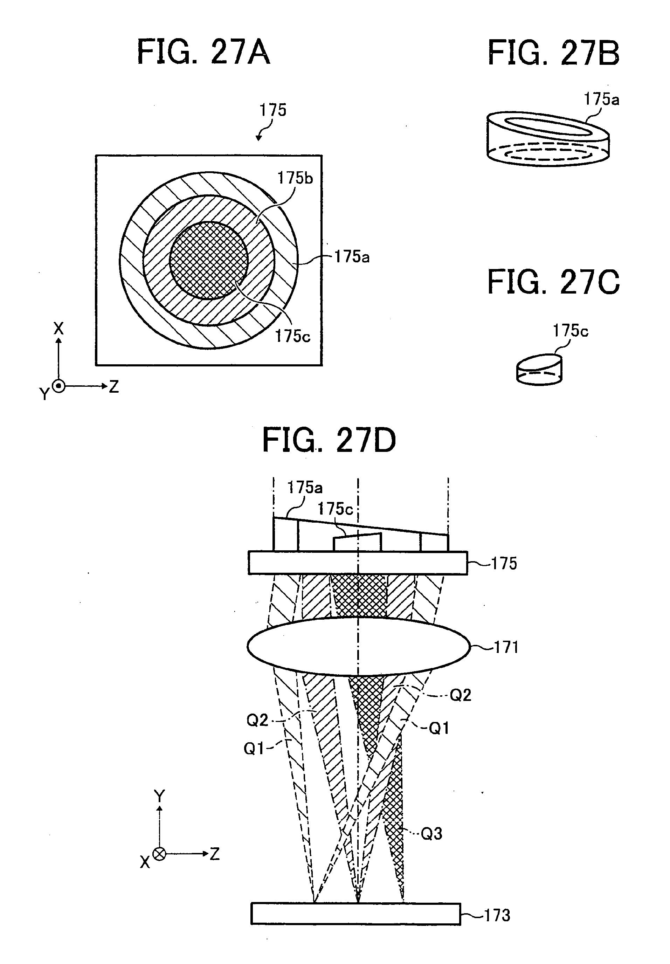

And, in the second embodiment, the optical disc apparatus 20 may use, for example as shown in FIGs. 27A through 27D, a glass element instead of the ring-shaped element 174. The glass element, including a cannular part 175a made by a transparent glass corresponding to the area 174a, and a cylinder part 175c made by a transparent glass corresponding to the area 174c, is affixed on a glass substrate. Top surfaces of the cannular part 175a and the cylinder part 175c slope downward in opposite directions. Beams which pass through the cannular part 175a, and through the cylinder part 175c become inclined in opposite directions, whereas a beam which passes through the area 175b between the cannular part 175a and the cylinder part 175c goes through directly.

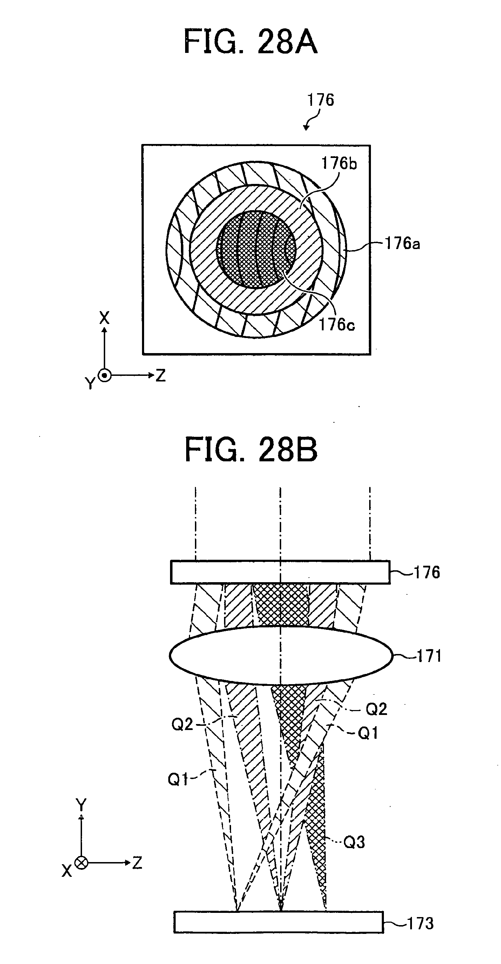

In the second embodiment, the optical disc apparatus 20 may use, for example as shown in FIGs. 28A and 28B, a diffraction element 176 instead of the ring-shaped element 174. The diffraction element 176 includes diffraction gratings at the area 176a corresponding to the area 174a, and area 176c corresponding to the area 174c, and the area 176a and the area 176c generate diffracted lights, which incline in opposite directions. A beam which passes through the area 175b between the cannular part 175a and the cylinder part 175c goes through directly.

And, in the second embodiment, the optical disc apparatus 20 may use a divided mirror element 227 and an axicon lens 228 instead of the spatial light modulation element 226. In above case, the objective lens 141 is unnecessary in the second embodiment. Therefore the optical disc apparatus can record more quickly.

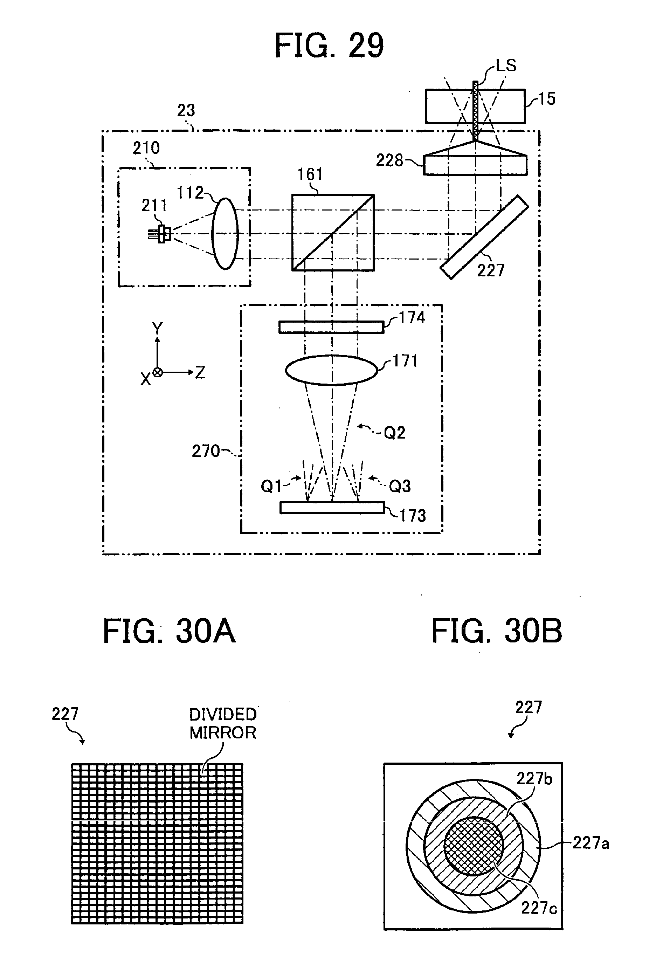

The divided mirror element 227 is located in +Z side of the beam splitter 161. The divided mirror element 227 includes, for example as shown in FIG. 30A, multiple divided mirrors located in a matrix. The inclination of each divided mirror changes based on the voltage applied to the voltage control circuit 29. Therefore, the optical disc apparatus 20 controls reflecting direction of light reflected from each divided mirror individually, according to the voltage applied by the voltage control circuit 29.

Here, the divided mirror element 227 includes, for example as shown in FIG. 30B, an area 227a corresponding to the 226a in the spatial light modulation element 226, an area 227b corresponding to the 226b in the spatial light modulation element 226, and an area 227c corresponding to the 226c in the spatial light modulation element 226.

The axicon lens 228 is located in +Y side of the divided mirror element 227 and forms a linear spot LS on the optical disc 15. Here, when a focusing process is performed adequately, a beam reflected from the area 227a converges on or adjacent to the first recording layer L1, a beam reflected from the area 227b converges on or adjacent to the second recording layer L2, and a beam reflected from the area 227c converges on or adjacent to the third recording layer L3. The optical disc apparatus 20 modulates optical intensity based on selecting a traveling direction of a reflected beam, a direction toward the axicon lens 228 or a direction away from the lens 228.

Here, when the optical disc 15 is reproduced, the voltage control circuit 29 controls the voltage applied to multiple divided mirrors at the area 227a (hereinafter may be called first divided mirror group) so that a power of the optical component focused on or adjacent to the first recording layer is Wp1, in the case where the reproduction information regarding the first recording layer L1 is obtained, the voltage control circuit 29 controls the voltage applied to multiple divided mirrors at the area 227b (hereinafter may be called second divided mirror group) so that a power of the optical component focused on or adjacent to the second recording layer L2 is Wp1, in the case where the reproduction information regarding the second recording layer L2 is obtained, and the voltage control circuit 29 controls the voltage applied to multiple divided mirrors at the area 227c (hereinafter may be called third divided mirror group) so that a power of the optical component focused on or adjacent to the third recording layer is Wp1, in the case where the reproduction information regarding the third recording layer L3 is obtained.

When the optical disc 15 is recorded, the voltage control circuit 29 controls the voltage applied to the first divided mirror group based on the recording signal for the first recording layer L1, in the case where the record data is recorded on the first recording layer L1, the voltage control circuit 29 controls the voltage applied to the second divided mirror group based on the recording signal for the second recording layer L2, in the case where the record data is recorded on the second recording layer L2, and the voltage control circuit 29 controls the voltage applied to the divided mirror group based on the recording signal for the third recording layer L3, in the case where the record data is recorded on the third recording layer L3.

In above case, the voltage control circuit 29 controls the voltage applied to the first divided mirror group so that a power of the optical component focused on or adjacent to the first recording layer L1 is Wp2 in the case that a mark is formed on the first recording layer L1, the voltage control circuit 29 controls the voltage applied to the second divided mirror group so that a power of the optical component focused on or adjacent to the second recording layer L2 is Wp2 in the case that a mark is formed on the second recording layer L2, and the voltage control circuit 29 controls the voltage applied to the third divided mirror group so that a power of the optical component focused on or adjacent to the third recording layer L3 is Wp2 in the case that a mark is formed on the third recording layer L3.

In above case, the voltage control circuit 29 controls the voltage applied to the first divided mirror group so that a power of the optical component focused on or adjacent to the first recording layer L1 is Wp1 in the case that a space is formed on the first recording layer _ L1, the voltage control circuit 29 controls the voltage applied to the second divided mirror group so that a power of the optical component focused on or adjacent to the second recording layer L2 is Wp1 in the case that a space is formed on the second recording layer L2, and the voltage control circuit 29 controls the voltage applied to the third divided mirror group so that a power of the optical component focused on or adjacent to the third recording layer L3 is Wp1 in the case that a space is formed on the third recording layer L3.

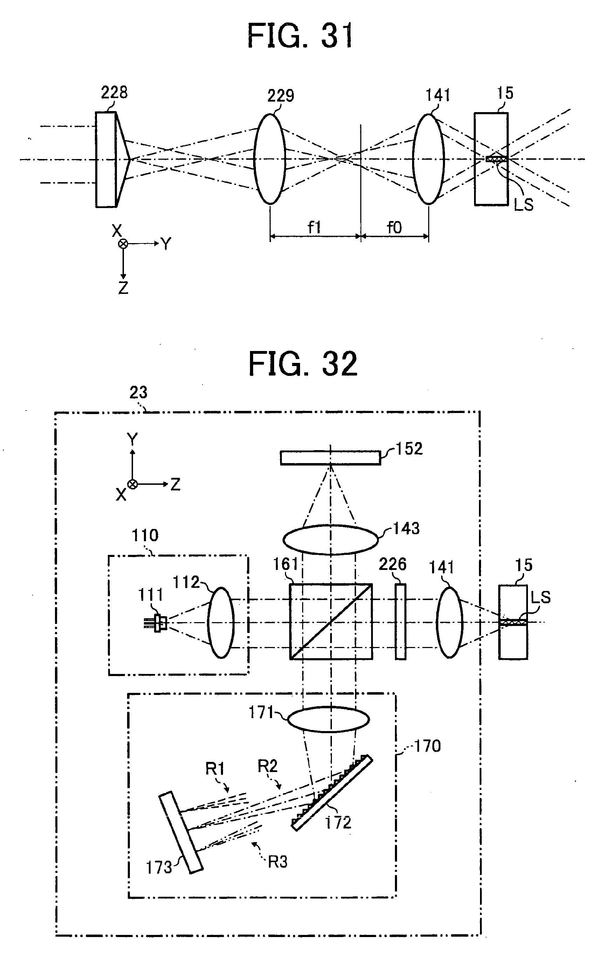

The length and the position of the linear spot formed by the axicon lens 228 are, for example as shown in FIG. 31, set arbitrarily by locating a lens 229 and the objective lens 141 in +Y side of the axicon lens 228. It is assumed that a focal length of the lens 229 is f1 and a focal length of the objective lens 141 is f0.

In above case, when the lens 229 and the objective lens 141 are located so that a focus point of a beam, which passes through the lens 229, corresponds to a front side focal position of the objective lens 141, the linear spot LS is formed. The length of the linear spot LS is changed by changing the location or focal position of the objective lens 141, and the position of the linear spot LS in the Y direction is changed by changing the focal position of the objective lens 141. Therefore, the optical disc apparatus may use the lens 229 and the objective lens 141 in the case that a desired linear spot cannot be obtained by using only the axicon lens 228.

Further, in the second embodiment, the optical disc apparatus 20 may use a multiple wavelength source like the light source 111 of the first embodiment instead of the light source 211 in the case that chromatic aberration is not a problem.

### -Third embodiment -

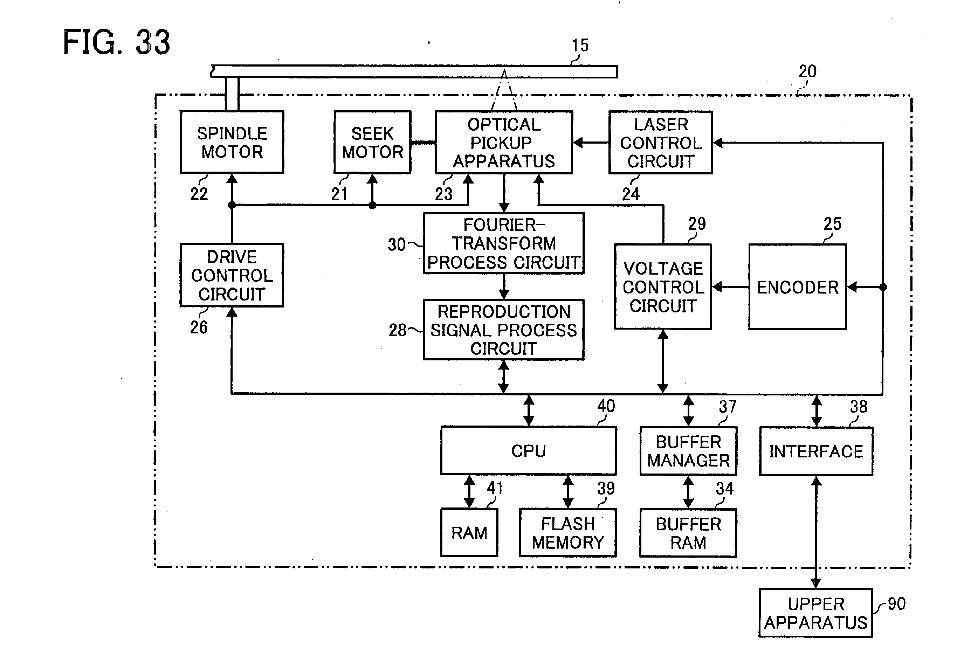

A third embodiment of the present invention is described below with reference to FIGs. 32 and 33.

The optical pickup apparatus in the third embodiment adds an objective lens 143 and a reference mirror 152 in the second embodiment, uses the optical output device 110 instead of the optical output device 210 in the second embodiment, uses a spatial light modulation element 226 instead of the chromatic aberration lens 131, and uses the detecting system 170 instead of the detecting system 270 in the second embodiment shown in FIG. 30. Therefore, the following discussion will mainly describe the differences from the first and second embodiments, using the same reference symbols as in the first and second embodiments for the same or equivalent parts as in the first and second embodiments, and descriptions of the same parts may be omitted.

The objective lens 143 is located in +Z side of the beam splitter 161 and the reference mirror 152 is located in +Y side of the objective lens 143.

A part of the beam irradiated from the optical output device 110 is divaricated to +Y direction at the beam splitter 161. The objective lens 143 focuses a divaricated beam on a mirror face of the reference mirror 152.

The beam reflected by the reference mirror 152 gets through the beam splitter 161 as a reference light via the objective lens 143, and is combined with the beam reflected by the optical disc 15, and becomes am interferential beam that has a multiple wavelength interference pattern.

The interferential beam is focused by the focus lens 171, is separated with respect to each wavelength by the wavelength dispersion element 172, and is detected by the detector 173.

The optical disc apparatus 20 includes a fourier-transform process circuit 30 detecting a reflected light intensity distribution in the thickness direction of the optical disc 15 by completing a fourier transform of multiple output signals of the detector 173. The fourier-transform process circuit 30 outputs a result of the fourier transform to the reproduction signal process circuit 28.

As described above, the optical pickup apparatus 23 includes the optical output device 110 including the multiple wavelength source, the spatial light modulation element 226 dividing the beam irradiated from the optical output device 110 into multiple optical components corresponding to multiple recording layers of the optical disc 15, and adding discrete or consecutive spherical aberration-shaped wave aberration to multiple optical components. The objective lens 141 focuses the beam, which passes through the spatial light modulation element 226 on the optical disc 15. The reference mirror 152 generates the reference light. The beam splitter 161 combines the reference light and the beam reflected from the optical disc 15 and generates the interferential beam and the wavelength dispersion element 172 separates the interferential beam with respect to each wavelength. Therefore, the optical pickup apparatus 23 according to the second embodiment has an effect the same as the first embodiment.

The optical disc apparatus 20 according to the third embodiment includes the optical pickup apparatus 23. Therefore the optical disc apparatus 20 according to the third embodiment has an effect the same as the first embodiment.

And, in the third embodiment, the optical disc apparatus 20 may use the divided mirror element 227 and the axicon lens 228 instead of the spatial light modulation element 226. In above case, the objective lens 141 is unnecessary in the third embodiment. And in above case, the lens 229 and the objective lens 141 may be located in +Y side of the axicon lens 228.

And, in the third embodiment, the optical pickup apparatus 23 may include the fourier-transform process circuit 30.

In the third embodiment, the optical disc apparatus 20 may adopt the beam reflected from the optical disc 15 as the reference light, where reflectance of a surface of the optical disc 15 is appropriate. In above case, the objective lens 142 and the reference mirror 152 are unnecessary in the third embodiment.

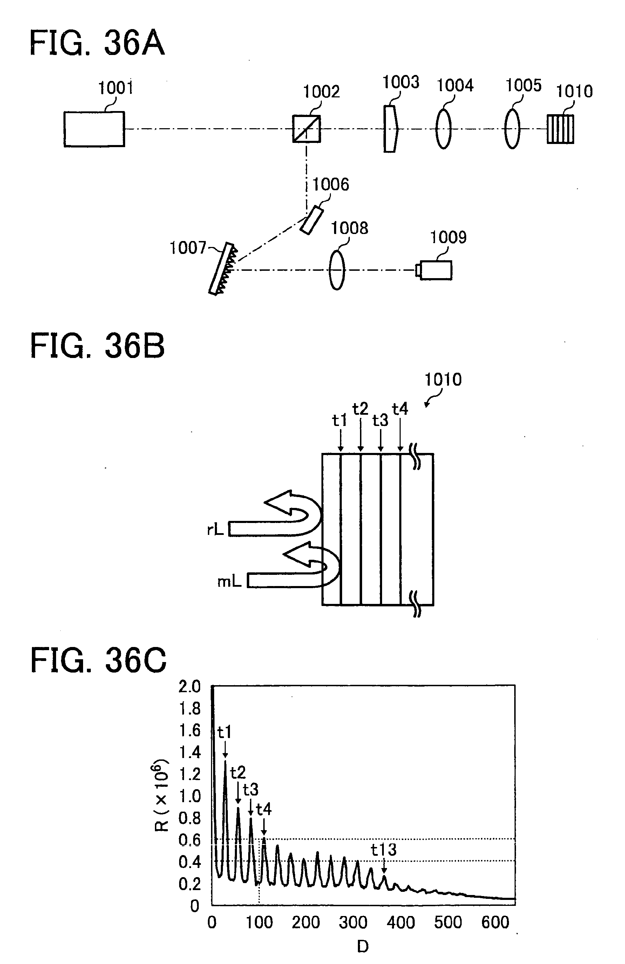

A reason of the above description is described below with reference to FIGs. 36A through 36C.

A measuring device includes a femtosecond laser light source 111 irradiating a laser, whose pulse width is 100 femtoseconds, a beam splitter 1002, an axicon lens 1003 whose apex angle is 170, a lens 1004 for adjusting a linear spot, an objective lens 1005, a reflection mirror 1006, a diffraction element 1007, a focus lens 1008, a two-dimensional CCD camera 1009, and a stacked glass 1010. The stacked glass 1010 includes multiple glass boards, whose thickness is 0.17 mm.

A beam irradiated from the femtosecond laser light source 111 gets through the stacked glass 1010 via the beam splitter 1002, the axicon lens 1003, the lens 1004, and the objective lens 1005. Here, a beam reflected by a surface of the stacked glass 1010 becomes a reference light rL and interferes with a material light mL reflected by a surface of one of the glass boards shown in FIG. 36B.

An interferential beam, which passes through the stacked glass 1010, gets through the beam splitter 1002 via the objective lens 1005, the lens 1004, and the axicon lens. The interferential beam separated by the beam splitter 1002 gets through the two-dimensional CCD camera 1009 via the reflection mirror 1006, the diffraction element 1007, and the focus lens 1008.

A sample of the results of the fourier-transform of a signal from the two-dimensional CCD camera, where the number of stacked glass boards is fourteen, is shown in FIG. 36C. In FIG. 36C, the abscissa axis indicates a distance D regarding a depth direction and a longitudinal axis indicates a reflected light intensity R, and a scale indicates a relative value. FIG. 36C indicates thirteen boundary phases, whose clearance is each 0.17 mm. In sum, the optical disc apparatus detects each reflected light intensity reflected from each boundary phase individually.

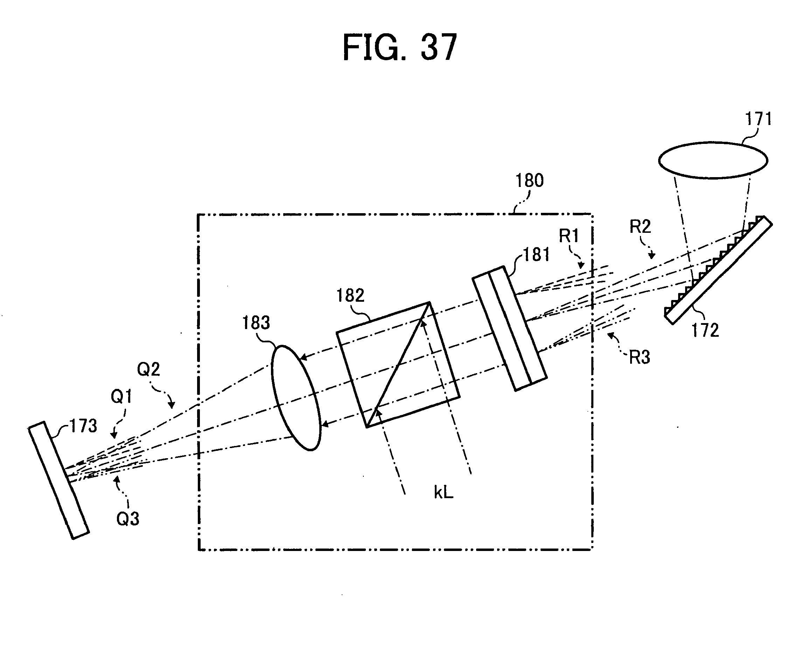

In the third embodiment, the optical disc apparatus 20 may use a fourier-transform optical system 180 between the wavelength dispersion element 172 and the detector 173 shown in FIG. 37. In above case, the fourier-transform process circuit 30 is unnecessary in the third embodiment and the optical disc apparatus 20 performs the reproducing process quickly.

The fourier-transform optical system 180 includes a spatial light modulation element 181, a beam splitter 182, and a focus lens 183.

The spatial light modulation element 181 is located in a front side focal position of the focus lens 183 and on a light path of the interferential beam, which passes through the wavelength dispersion element 172. The spatial light modulation element 181 changes a phase of a detection light kL based on the intensity of the interferential beam, which passes through the wavelength dispersion element 172, such as PAL-SLM (Parallel Aligned Nematic Liquid Crystal Spatial Light Modulator) manufactured for Hamamatsu Photonics K.K.

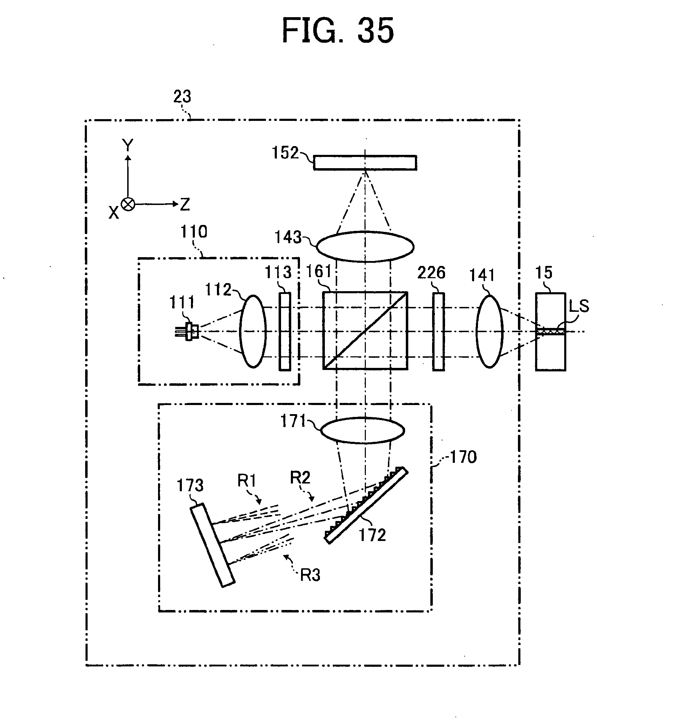

The beam splitter 182 is located on a light path of the interferential beam and between the spatial light modulation element 181 and the focus lens 183. The beam splitter changes a path of a part of the detection light kL from outside (from lower right in FIG. 35) toward the spatial light modulation element 181.

The spatial light modulation element 181 modulates the detected light kL based on an intensity distribution of a interferential light, which passes through the wavelength dispersion element 172. The detection light kL modulated at the spatial light modulation element 181 is detected by a detector.

The detector 173 is located behind the focal position of the focus lens 183. Multiple signals output from the detector 173 include information regarding the intensity of the reflected light reflected from each recording layer. Therefore, the reproduction signal process circuit 28 obtains the servo signal, the address information, the synchronism information, and the RF signal with respect to each recording layer based on multiple signals output from the detector 183.

When the present invention is adopted in a biologic body inside an inspection device, a high-resolution measurement is operated against whole area regarding a depth direction.

The optical disc 15 in the embodiment illustrated herein has three recording layers. However, the present invention is not limited to optical discs that have three recording layers.

Further, the optical disc apparatus 20 in each embodiment performs recording and reproducing of the optical disc, which is recorded three-dimensionally on at least one recording layer.

Further, the optical disc may be rewritable. In above case, the optical disc apparatus erases information recorded on multiple recording layers virtually simultaneously. Therefore, the optical disc apparatus performs an erasing process quickly.

Further, in each embodiment, the optical pickup apparatus may include the voltage control circuit 29.

### -Information processing apparatus-

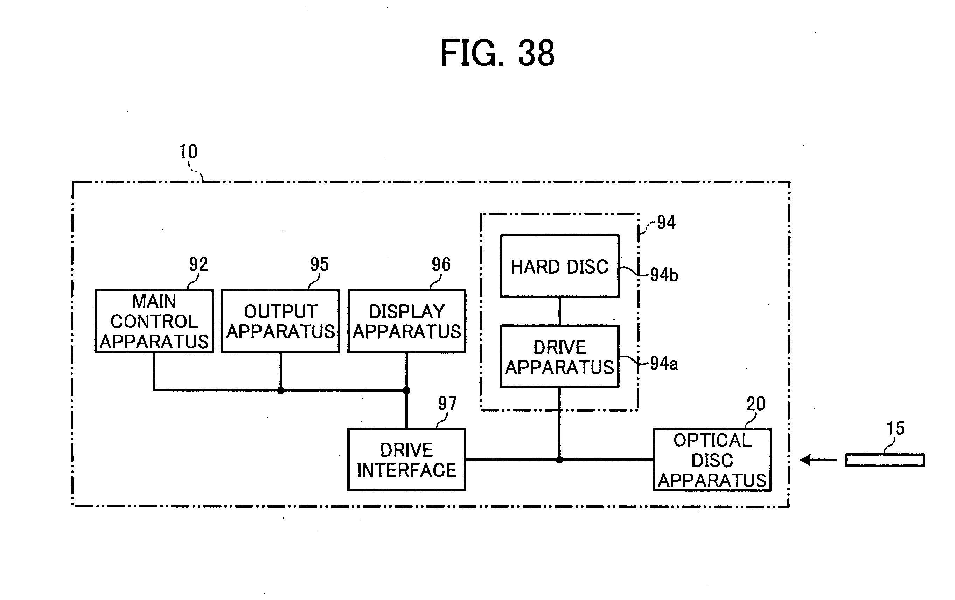

An information processing apparatus according to the present invention is described below with reference to FIG. 38.

The information processing apparatus 10 includes a main control apparatus 92, the optical disc apparatus 20, a HDD 94, an input apparatus 95, a display apparatus 96, a drive interface 97, and so on.

The HDD 94 includes a hard disc 94a and a drive apparatus 94b for driving the hard disc 94a.

The display apparatus 96 includes a screen such as a liquid crystal display (LCD) or a plasma display panel (PDP) (not shown in drawings) and displays various information indicated by the main control apparatus 92.

The input apparatus 95 includes an input medium such as a key board, a mouse, a tablet, a light pen, and a touch panel. The input apparatus handles various information input from a user of the main control apparatus 92, and the information may be input wirelessly.

The information processing apparatus 10 may adopt a device that combines the display apparatus 96 and the input apparatus 95 such as LCD with a touch panel.

The drive interface is bi-directionally interfaced between the main control apparatus 92 and the optical disc apparatus 20 or the HDD 94 and complies with a standard interface same as the interface 38.

In the information processing apparatus 10 described above, when a user sends an input request for reproducing toward the optical disc 15 using the input apparatus 95, the main control apparatus 92 sends a command for reproducing to the optical disc apparatus 20.

The optical disc apparatus 20 operates the reproducing process when the optical disc apparatus 20 receives the command for reproducing.

The main control apparatus 92 displays a result of reproducing on the screen of the display apparatus 96.

When the user inputs a request for recording using the input apparatus 95, the main control apparatus 92 sends a command for recording to the optical disc apparatus 20.

The optical disc apparatus 20 operates the recording process when the optical disc apparatus 20 receives the command for recording.

The main control apparatus 92 displays a result of recording on the screen of the display apparatus 96.

As described above, the information processing apparatus 10 operates high-speed access to the optical disc having multiple recording layers without increasing cost and without increasing the size of the optical pickup apparatus 23 as a result, because the apparatus 20 accesses multiple recording layers of the optical disc 15 simultaneously.

The entire disclosure of Japanese Patent Application JP2006-321198, filed November 29, 2006, is incorporated herein by reference.

## Claims

1. An optical head for irradiating an irradiation beam onto an optical recording medium having multiple recording positions in the thickness direction, and for receiving a reflection beam reflected from the recording medium, said optical head comprising:
a light source;
an optical system for transmitting the irradiation beam from the light source to the recording positions of an optical recording medium, for separating optical components of a reflected beam, and for transmitting the optical components to respective detection positions; and
a detector having multiple detecting areas for detecting the optical components individually.

2. The optical head according to claim 1, wherein the light source produces the irradiation beam such that the optical components have different wavelengths.

3. The optical head according to claim 1 or 2, wherein the optical system is located on a light path of the irradiation beam, and includes a wavelength filter for controlling intensity of the optical components.

4. The optical head according to claim 1, 2 or 3, wherein the multiple optical components correspond to multiple recording positions; and
wherein the optical system includes:
a first wavelength dispersion element changing the transmission direction of the irradiation beam based on wavelength,
a spatial light modulation element modulating the intensity of the optical components included in the irradiation beam, which pass through the first wavelength dispersion element,
an objective lens having chromatic aberration and focusing the irradiation beam, which passes through the spatial light modulation element, on the optical recording medium, and
a second wavelength dispersion element changing the transmission direction of the reflection beam based on wavelength, and being located on a light path of the reflection beam.

5. The optical head according to claim 1, 2 or 3, wherein the multiple optical components correspond to multiple recording positions; and
wherein the optical system includes
a first wavelength dispersion element changing a transmission direction of the irradiation beam based on wavelength,
a spatial light modulation element modulating intensity of the optical components, which pass through the first wavelength dispersion element,
a chromatic aberration lens modifying the irradiation beam, which passes through the spatial light modulation element, based on wavelength
an objective lens focusing the irradiation beam, which passes through the chromatic aberration lens, on the optical recording medium, and
a second wavelength dispersion element changing a transmission direction of the reflection beam based on wavelength and being located on a light path of the reflection beam.

6. The optical head according to claim 1, 2 or 3, wherein the multiple optical components correspond to multiple recording positions; and
the optical system includes:
a first wavelength dispersion element changing a transmission direction of the irradiation beam based on wavelength,
a spatial light modulation element modulating intensity of the optical components included in the irradiation beam, which pass through the first wavelength dispersion element,
a second wavelength dispersion element modifying the irradiation beam, which passes through the spatial light modulation element, based on wavelength
an objective lens focusing the irradiation beam, which passes through the second wavelength dispersion element, on the optical recording medium, and
a third wavelength dispersion element changing a transmission direction of the reflection beam based on wavelength and being located on a light path of the reflection beam.

7. The optical head according to claim 1, 2 or 3, wherein multiple optical components correspond to multiple recording positions; and
wherein the optical system includes:
a first wavelength dispersion element changing a transmission direction and modifying the irradiation beam based on wavelength,
a spatial light modulation element modulating intensity of the optical components included in the irradiation beam, which pass through the first wavelength dispersion element,
an objective lens focusing the irradiation beam, which passes through the second wavelength dispersion element, on the optical recording medium, and
a second wavelength dispersion element changing a transmission direction of the reflection beam based on wavelength and being located on a light path of the reflection beam.

8. The optical head according to claim 1, 2 or 3, wherein the irradiation beam includes multiple optical components corresponding to the recording positions;
the optical system is located on the light path of the irradiation beam and a light path of the reflection beam, and includes:
a spatial light modulation element adding wave aberration to the irradiation beam,
an objective lens focusing the irradiation beam, which passes through the spatial light modulation element, on the optical recording medium,
a reference mirror reflecting part of the irradiation beam and being located on the light path of the irradiation beam,
a combining optical element combining the part of the irradiation beam and the reflection beam, which passes through the spatial light modulation element, and generating an interferential beam having a multiple wavelength interference pattern, and
a separation optical element separating the interferential beam with respect to each optical component.

9. The optical head according to claim 1, 2 or 3, wherein:
the irradiation beam includes multiple optical components corresponding to the recording positions;
the optical system is located on the light path of the irradiation beam and a light path of the reflection beam, and includes:
a spatial light modulation element adding wave aberration to the irradiation beam,
an axicon lens focusing the irradiation beam, which passes through the spatial light modulation element, on the optical recording medium, and
a reference mirror reflecting a part of the irradiation beam and being located on the light path of the irradiation beam,
a combining optical element combining the part of the irradiation beam and the reflection beam, which passes through the spatial light modulation element, and generating an interferential beam having a multiple wavelength interference pattern, and
a separation optical element separating the interferential beam with respect to each optical component.

10. The optical head according to claim 1, 2 or 3, wherein:
the irradiation beam includes multiple optical components corresponding to the recording positions;
the optical system is located on the light path of the irradiation beam and a light path of the reflection beam, and includes
a spatial light modulation element adding wave aberration to the irradiation beam,
an objective lens focusing the irradiation beam, which passes through the spatial light modulation element, on the optical recording medium, and
a combining optical element combining a reference beam reflected from the surface of the optical recording medium and the reflection beam, which passes through the spatial light modulation element, and generating an interferential beam having a multiple wavelength interference pattern, and
a separation optical element separating the interferential beam with respect to each optical component.

11. The optical head according to claim 1, 2 or 3, wherein:
the irradiation beam includes multiple optical components corresponding to the recording positions;
the optical system is located on the light path of the irradiation beam and a light path of the reflection beam, and includes:
a spatial light modulation element adding wave aberration to the irradiation beam,
an axicon lens focusing the irradiation beam, which passes through the spatial light modulation element, on the optical recording medium,
a combining optical element combining a reference beam reflected from the surface of the optical recording medium and the reflection beam, which passes through the spatial light modulation element, and generating an interferential beam having a multiple wavelength interference pattern, and
a separation optical element separating the interferential beam with respect to each optical component.

12. The optical head according to claim 11, further comprising a fourier-transform optical system computing a fourier-transform of the beam, which passes through the separation optical element.

13. The optical head according to claim 1, 2 or 3 wherein:
the irradiation beam has multiple optical components corresponding to the recording positions;
the optical system is located on the light path of the irradiation beam and a light path of the reflection beam, and includes
a spatial light modulation element adding wave aberration to the irradiation beam,
an objective lens focusing the irradiation beam, which passes through the spatial light modulation element, on the optical recording medium, and
a separation optical element located on a light path of the reflection beam, which passes through the spatial light modulation element, and including multiple areas receiving the optical components of the reflection beam and irradiating each of the optical components in different directions.

14. The optical head according to claim 1, 2 or 3 wherein:
the irradiation beam includes multiple optical components corresponding to the recording positions;
the optical system is located on the light path of the irradiation beam and a light path of the reflection beam, and includes
a spatial light modulation element adding wave aberration to the irradiation beam,
an axicon lens focusing the irradiation beam, which passes through the spatial light modulation element, on the optical recording medium, and
a separation optical element located on a light path of the reflection beam, which passes through the spatial light modulation element, and including multiple areas receiving the optical components of the reflection beam and irradiating each of the optical components in different directions.

15. An optical disc apparatus for reproducing information from an optical recording medium that has multiple recording positions in a thickness direction, comprising;
the optical head according to any one of claims 1 to 14, and
a processing apparatus for reproducing information using an output signal of the detector of the optical head.

16. An optical disc apparatus for reproducing information from an optical recording medium having multiple recording positions in a thickness direction, comprising;
the optical head according to any one of claims 1 to 14,
a fourier-transform process circuit computing a fourier-transform of an output signal of the detector of the optical head, and
a processing apparatus for reproducing information using a result of the fourier-transform.

17. An information processing apparatus accessing an optical recording medium having multiple recording positions in a thickness direction, comprising:
the optical disc apparatus according to claim 15 or 16; and
a control apparatus for controlling the optical disc apparatus.

18. A method of handling an optical recording medium having multiple recording positions in a thickness direction, said method comprising the steps of:
transmitting a beam toward the recording positions, separating optical components of a beam reflected from the recording positions, and transmitting the optical components toward respective detection positions; and
detecting the optical components individually at the detection positions.

19. The method of claim 18, wherein said handling includes recording information on said medium.

20. The method of claim 18, wherein said handling includes reproducing information from said medium.
